# EUROPEAN PATENT APPLICATION

(11) **EP 2 683 152 A1**
(43) Date of publication of application: **08.01.2014**
(21) Application number: 12753041.8
(22) Date of filing: 01.03.2012
(51) Int. Cl.: H04N 5/225, G06F 3/048, H04N 5/232

(54) **ELECTRONIC DEVICE AND GROUPING METHOD**

(30) Priority: 03.03.2011 JP 2011046396; 09.03.2011 JP 2011051536; 27.02.2012 JP 2012040004
(71) Applicant: Nikon Corporation, Tokyo 100-8331 (JP)
(72) Inventor: TANAKA, Mikiya, Tokyo 100-8331 (JP); MAEDA, Masaya, Tokyo 100-8331 (JP); YAMAGUCHI, Akira, Tokyo 100-8331 (JP)
(74) Representative: Viering, Jentschura & Partner
(86) International application number: PCT/JP2012/055188
(87) International publication number: WO 2012/118138

(57) **Abstract**

An electronic device is provided, including an acquisition unit that acquires a plurality of pieces of rhythm information representing movements of respective housings of a plurality of electronic devices, a calculation unit that calculates the degree of similarity between the plurality of pieces of rhythm information of the plurality of electronic devices acquired by the acquisition unit, and a grouping unit that generates grouping information for grouping the plurality of electronic devices based on the degree of similarity between the plurality of pieces of rhythm information of the plurality of electronic devices calculated by the calculation unit.

## Description

### Technical Field

The present invention relates to an electronic device and a grouping method.

Priority is claimed on Japanese Patent Application No. 2011-046396, filed March 3, 2011, Japanese Patent Application No. 2011-051536, filed March 9, 2011, and Japanese Patent Application No. 2012-40004, filed February 27, 2012, the contents of which are incorporated herein by reference.

### Background Art

In the related art, an imaging device is disclosed that groups input images by evaluating similarity between the input images (for example, refer to Patent Document 1).

### Citation List

### Patent Document

[Patent Document 1] Japanese Unexamined Patent Application, First Publication No. 2011-010275

### Summary of Invention

### Technical Problem

However, an electronic device that groups images such as the imaging device disclosed in Patent Document 1 does not group electronic devices. In other words, targets of grouping performed by the electronic device are limited to images, and the electronic devices themselves are not the targets of grouping. Therefore, there has been a problem in that it is impossible to realize various application processes which could be realized if the electronic devices themselves were grouped (for example, audio output in the same manner, light emission in the same manner, or vibration in the same manner by the plurality of electronic devices grouped into the same group).

An object of aspects according to the present invention is to provide a technique with which a plurality of electronic devices can be grouped conveniently.

### Solution to Problem

According to an aspect of the present invention, an electronic device is provided, including an acquisition unit that acquires a plurality of pieces of rhythm information representing movements of respective housings of a plurality of electronic devices, a calculation unit that calculates the degree of similarity between the plurality of pieces of rhythm information of the plurality of electronic devices acquired by the acquisition unit, and a grouping unit that generates grouping information for grouping the plurality of electronic devices based on the degree of similarity between the plurality of pieces of rhythm information ofthe plurality of electronic devices calculated by the calculation unit.

According to the aspect, the acquisition unit may include a reception unit that receives the rhythm information of housings of additional electronic devices, the calculation unit may calculate the degree of similarity between the rhythm information of a first additional electronic device received by the reception unit and the rhythm information of a second additional electronic device received by the reception unit, and the grouping unit may group the first additional electronic device and the second additional electronic device into the same group in a case where the degree of similarity between the rhythm information of the first additional electronic device and the rhythm information of the second additional electronic device calculated by the calculation unit is equal to or higher than a predetermined threshold.

According to the aspect, the acquisition unit may include a detection unit that detects the movement of the housing of a main electronic device, and a reception unit that receives the rhythm information of the housings of additional electronic devices, the calculation unit may calculate the degree of similarity between the rhythm information representing the movement of the housing of the main electronic device detected by the detection unit and the rhythm information of the additional electronic devices received by the reception unit, and the grouping unit may group the main electronic device and the additional electronic devices into the same group in a case where the degree of similarity between the rhythm information of the main electronic device and the rhythm information of the additional electronic devices calculated by the calculation unit is equal to or higher than a predetermined threshold.

According to an aspect of the present invention, an electronic device is provided, including an acquisition unit that acquires a plurality of pieces of rhythm information representing a grip on a housing by a user based on a result of sensing by a sensing unit which senses a contact position on each side surface of respective housings of a plurality of electronic devices, a calculation unit that calculates the degree of similarity between the plurality of pieces of rhythm information of the plurality of electronic devices acquired by the acquisition unit, and a grouping unit that generates grouping information for grouping the plurality of electronic devices based on the degree of similarity between the plurality of pieces of rhythm information of the plurality of electronic devices calculated by the calculation unit.

According to an aspect of the present invention, an electronic device is provided, including an acquisition unit that acquires a plurality of pieces of rhythm information representing the pattern of temporal or spatial change of objects in respective captured images of a plurality of electronic devices, a calculation unit that calculates the degree of similarity between the plurality of pieces of rhythm information of the respective objects acquired by the acquisition unit, and a grouping unit that generates grouping information for grouping the plurality of electronic devices based on the degree of similarity between the plurality of pieces of rhythm information of the respective objects calculated by the calculation unit.

According to the aspect, the acquisition unit may include a reception unit that receives the rhythm information of objects in captured images captured by additional electronic devices, the calculation unit may calculate the degree of similarity between the rhythm information of an object in a first additional captured image captured by a first additional electronic device received by the reception unit and the rhythm information of an object in a second additional captured image captured by a second additional electronic device received by the reception unit, and the grouping unit may group the first additional electronic device and the second additional electronic device into the same group in a case where the degree of similarity between the rhythm information of the object in the first additional captured image and the rhythm information of the object in the second additional captured image calculated by the calculation unit is equal to or higher than a predetermined threshold.

According to the aspect, the acquisition unit may include an imaging unit, and a reception unit that receives the rhythm information of objects in captured images captured by additional electronic devices, the calculation unit may calculate the degree of similarity between the rhythm information of the object in a main captured image captured by the imaging unit and the rhythm information of the object in the additional captured image captured by the additional electronic device received by the reception unit, and the grouping unit may group the main electronic device and the additional electronic device into the same group in a case where the degree of similarity between the rhythm information of the object in the main captured image and the rhythm information of the object in the additional captured image calculated by the calculation unit is equal to or higher than a predetermined threshold.

According to the aspect, the electronic device may further include a display unit that displays connection information for communicating with the additional electronic device grouped into the same group by the grouping unit.

According to the aspect, the electronic device may further include a transmission unit that transmits operation control information to the additional electronic device so that the plurality of electronic devices grouped into the same group by the grouping unit audio-output in the same manner, emit light in the same manner, or vibrate in the same manner.

According to an aspect of the present invention, a grouping method for grouping a plurality of electronic devices is provided, including acquiring a plurality of pieces of rhythm information representing movements of respective housings of the plurality of electronic devices, calculating the degree of similarity between the plurality of pieces of rhythm information of the plurality of electronic devices which are acquired, and generating grouping information for grouping the plurality of electronic devices based on the degree of similarity between the plurality of pieces of rhythm information of the plurality of electronic devices which is calculated.

According to an aspect of the present invention, a grouping method for grouping a plurality of electronic devices is provided, including acquiring a plurality of pieces of rhythm information representing the pattern of temporal or spatial change of objects in respective captured images of the plurality of electronic devices, calculating the degree of similarity between the plurality of pieces of rhythm information of the respective objects which are acquired, and generating grouping information for grouping the plurality of electronic devices based on the degree of similarity between the plurality of pieces of rhythm information of tbe respective objects which is calculated.

### Advantageous Effects of Invention

According to the aspects of the present invention, a plurality of electronic devices can be grouped conveniently.

### Brief Description of Drawings

FIG. 1A is a schematic diagram showing an overview of processing by an electronic device according to a first embodiment of the present invention.
FIG. 1B is a schematic diagram showing an overview of processing by the electronic device according to the first embodiment of the present invention.
FIG. 2A is a configuration diagram showing an example of the electronic device.
FIG. 2B is a configuration diagram showing a part of the electronic device.
FIG. 2C is a configuration diagram showing a part of the electronic device.
FIG. 3A is an example of information acquired or stored by the electronic device.
FIG. 3B is an example of information acquired or stored by the electronic device.
FIG. 3C is an example of information acquired or stored by the electronic device.
FIG. 3D is an example of information acquired or stored by the electronic device.
FIG. 3E is an example of information acquired or stored by the electronic device.
FIG. 4 is a configuration diagram showing an example of an additional electronic device.
FIG. 5 is a flowchart showing an example of operation of the electronic device.
FIG. 6A is a schematic diagram showing a result of grouping by the electronic device.
FIG. 6B is a schematic diagram showing a result of grouping by the electronic device.
FIG. 6C is a schematic diagram showing a result of grouping by the electronic device.
FIG. 7A is a schematic diagram showing an overview of processing by an electronic device according to a second embodiment of the present invention.
FIG. 7B is a schematic diagram showing an overview of processing by the electronic device according to the second embodiment of the present invention.
FIG. 8A is a configuration diagram showing an example of the electronic device.
FIG. 8B is a configuration diagram showing a part of the electronic device.
FIG. 8C is a configuration diagram showing a part of the electronic device.
FIG. 8D is a configuration diagram showing a part of the electronic device.
FIG. 9A is an example of information acquired or stored by the electronic device.
FIG. 9B is an example of information acquired or stored by the electronic device.
FIG. 9C is an example of information acquired or stored by the electronic device.
FIG. 9D is an example of information acquired or stored by the electronic device.
FIG. 9E is an example of information acquired or stored by the electronic device.
FIG. 10A is a configuration diagram showing an example of an additional electronic device.
FIG. 10B is a configuration diagram showing an example of an additional electronic device.
FIG. 11A is an explanatory diagram showing rhythm information representing the pattern of temporal change of an object, the generation of the rhythm information, and the calculation of the degree of similarity of the rhythm information.
FIG. 11B is an explanatory diagram showing rhythm information representing the pattern of temporal change of the object, the generation of the rhythm information, and the calculation of the degree of similarity of the rhythm information.
FIG. 11C is an explanatory diagram showing rhythm information representing the pattern of temporal change of the object, the generation of the rhythm information, and the calculation of the degree of similarity of the rhythm information.
FIG. 12A is an explanatory diagram showing rhythm information representing the pattern of temporal change of the object, the generation of the rhythm information, and the calculation of the degree of similarity of the rhythm information.
FIG. 12B is an explanatory diagram showing rhythm information representing the pattern of temporal change of the object, the generation of the rhythm information, and the calculation of the degree of similarity of the rhythm information.
FIG. 12C is an explanatory diagram showing rhythm information representing the pattern of temporal change of the object, the generation of the rhythm information, and the calculation of the degree of similarity of the rhythm information.
FIG. 12D is an explanatory diagram showing rhythm information representing the pattern of temporal change of the object, the generation of the rhythm information, and the calculation of the degree of similarity of the rhythm information.
FIG. 13A is an explanatory diagram showing rhythm information representing the pattern of temporal change of the object, the generation of the rhythm information, and the calculation of the degree of similarity of the rhythm information.
FIG. 13B is an explanatory diagram showing rhythm information representing the pattern of temporal change of the object, the generation of the rhythm information, and the calculation of the degree of similarity of the rhythm information.
FIG. 13C is an explanatory diagram showing rhythm information representing the pattern of temporal change of the object, the generation of the rhythm information, and the calculation of the degree of similarity of the rhythm information.
FIG. 14A is an explanatory diagram showing rhythm information representing the pattern of spatial change of an object, the generation of the rhythm information, and the calculation of the degree of similarity of the rhythm information.
FIG. 14B is an explanatory diagram showing rhythm information representing the pattern of spatial change of the object, the generation of the rhythm information, and the calculation of the degree of similarity of the rhythm information.
FIG. 14C is an explanatory diagram showing rhythm information representing the pattern of spatial change of the object, the generation of the rhythm information, and the calculation of the degree of similarity of the rhythm information.
FIG. 15A is an explanatory diagram showing rhythm information representing the pattern of spatial change of the object, the generation of the rhythm information, and the calculation of the degree of similarity ofthe rhythm information.
FIG. 15B is an explanatory diagram showing rhythm information representing the pattern of spatial change of the object, the generation of the rhythm information, and the calculation of the degree of similarity of the rhythm information.
FIG. 16A is an explanatory diagram showing rhythm information representing the pattern of spatial change of the object, the generation of the rhythm information, and the calculation of the degree of similarity of the rhythm information.
FIG. 16B is an explanatory diagram showing rhythm information representing the pattern of spatial change of the object, the generation of the rhythm information, and the calculation of the degree of similarity of the rhythm information.
FIG. 17A is an explanatory diagram showing rhythm information representing the pattern of spatial change of the object, the generation of the rhythm information, and the calculation of the degree of similarity of the rhythm information.
FIG. is an explanatory diagram showing rhythm information representing the pattern of spatial change of the object, the generation of the rhythm information, and the calculation of the degree of similarity of the rhythm information.
FIG. 17C is an explanatory diagram showing rhythm information representing the pattern of spatial change of the object, the generation of the rhythm information, and the calculation of the degree of similarity of the rhythm information.
FIG. 17D is an explanatory diagram showing rhythm information representing the pattern of spatial change of the object, the generation of the rhythm information, and the calculation of the degree of similarity of the rhythm information.
FIG. 18 is a flowchart showing an example of operation of the electronic device.
FIG. 19A is a schematic diagram showing a result of grouping by the electronic device.
FIG. 19B is a schematic diagram showing a result of grouping by the electronic device.
FIG. 19C is a schematic diagram showing a result of grouping by the electronic device.
FIG. 20 is a perspective diagram showing an external configuration of an electronic device 1 and an electronic device 100.
FIG. 21A is an image showing a grip pattern example.
FIG. 21B is an image showing a grip pattern example.

### Description of Embodiments

### [First Embodiment]

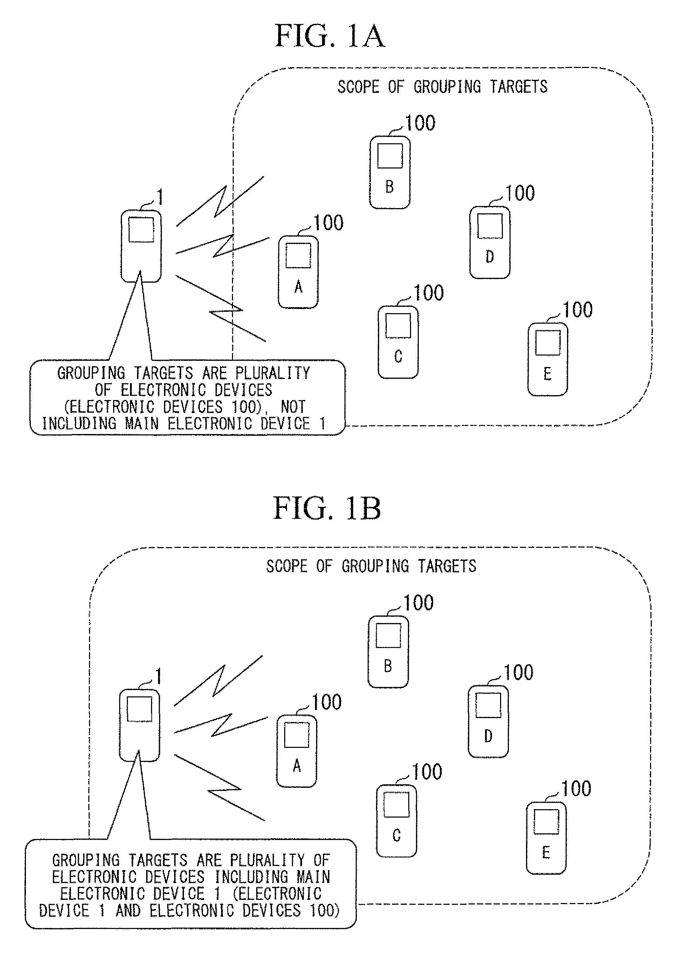

Hereinafter, an embodiment of the present invention will be described referring to the accompanying drawings. FIGS. 1A and 1B are schematic diagrams showing an overview of processing by an electronic device 1 according to a first embodiment of the present invention.

The electronic device 1 (for example, a portable electronic device) groups a plurality of electronic devices (for example, portable electronic devices).

For example, as shown in FIG 1A, the electronic device 1 groups a plurality of additional electronic devices 100 that are present in the vicinity of the main electronic device 1. In other words, as shown with the dashed line, the grouping targets of the main electronic device 1 are the plurality of electronic devices 100, excluding the main electronic device 1.

As another example, as shown in FIG. 1B, the electronic device 1 groups the main electronic device 1 and the plurality of additional electronic devices 100 that are present in the vicinity of the main electronic device 1. In other words, as shown with the dashed line, the grouping targets of the main electronic device 1 are the plurality of electronic devices (the electronic device 1 and the electronic devices 100), including the main electronic device 1.

The electronic device 1 and each of the plurality of additional electronic devices 100 automatically exchange connection information (described later) with each other via communication when the electronic devices approach each other within a predetermined distance.

Hereinafter, the aspect shown in FIG. 1A (the aspect in which the grouping targets are the plurality of electronic devices 100, excluding the main electronic device 1) will be described. The aspect shown in FIG. 1B (the aspect in which the grouping targets are the plurality of electronic devices (the electronic device 1 and the electronic devices 100), including the main electronic device 1) will be described later.

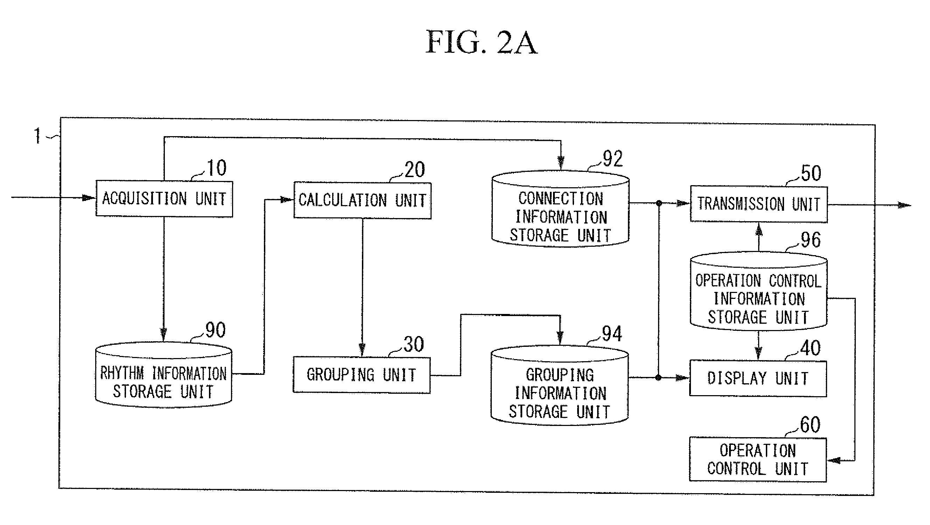

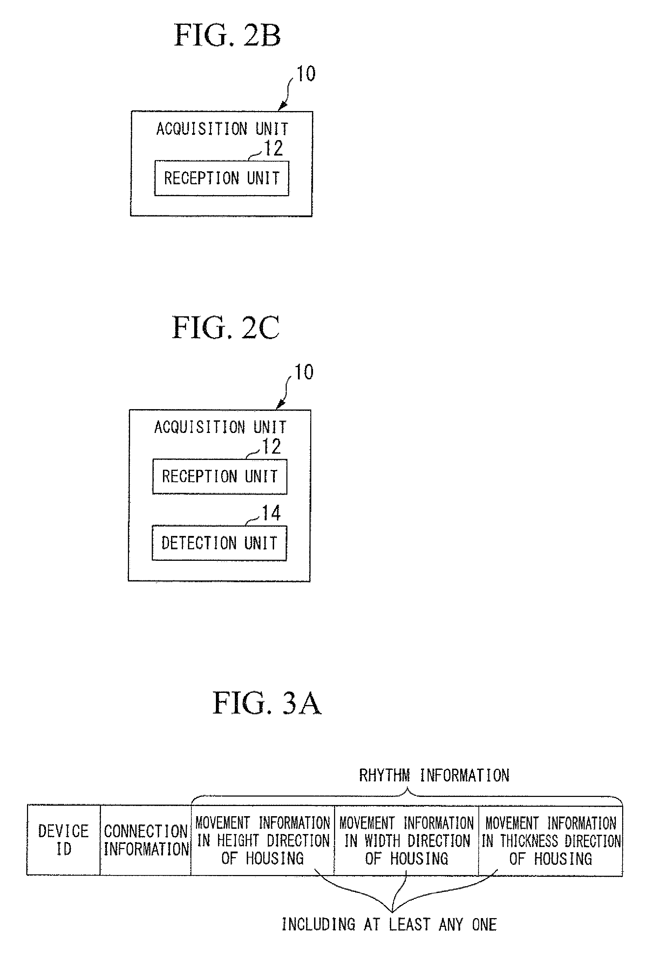

FIGS. 2A to 2C are configuration diagrams showing examples of the electronic device 1. FIGS. 3A to 3E are examples of information acquired or stored by the electronic device 1. As shown in FIG. 2A, the electronic device 1 includes an acquisition unit 10, a calculation unit 20, a grouping unit 30, a display unit 40, a transmission unit 50, an operation control unit 60, a rhythm information storage unit 90, a connection information storage unit 92, a grouping information storage unit 94, and an operation control information storage unit 96.

As shown in FIG. 2B, the acquisition unit 10 has a reception unit 12. As shown in FIG. 2C, the acquisition unit 10 may have a detection unit 14 in addition to the reception unit 12. In the case of the aspect shown in FIG. 1A, the detection unit 14 is optional, and the description will be made on the assumption that the detection unit 14 is absent.

The acquisition unit 10 acquires rhythm information representing a movement of a housing of the additional electronic device 100. Specifcally, as shown in FIG. 3A, the reception unit 12 in the acquisition unit 10 receives the rhythm information of the additional electronic device 100 along with a device ID and the connection information of the additional electronic device 100 from each of the additional electronic devices 100. The device ID is identification information for identifying each of the electronic devices 100. The connection information is information for communicating with each of the electronic devices 100, and examples thereof include protocol-related information and address information.

In a case where one of the additional electronic devices 100 does not transmit the connection information along with the rhythm information to the electronic device 1 (for example, in a case where the connection information of the additional electronic device 100 is already transmitted to (exchanged with) the electronic device 1 along with the device ID before the transmission of the rhythm information), the reception unit 12 receives the rhythm information of the additional electronic device 100 along with the device ID of the additional electronic device 100. In other words, in the above-described case, the reception unit 12 does not receive the connection information along with the rhythm information.

As shown in FIG. 3A, the rhythm information received by the reception unit 12 includes at least one of movement information among the movement information (for example, cycle and amplitude) in the height direction of the housing (in other words, the longitudinal direction of the housing), the movement information in the width direction of the housing (in other words, the lateral direction of the housing), and the movement information in the thickness direction of the housing. The rhythm information shown in FIG. 3A is an example, and the rhythm information received by the reception unit 12 may include, instead of or in addition to each of the above-described movement information, at least one of the information among the movement information in which the height direction of the housing is the axis (for example, the angle of rotation on the axis and cycle), the movement information in which the width direction of the housing is the axis, the movement information in which the thickness direction of the housing is the axis, the movement information in the south-north direction, the movement information in the east-west direction, the movement information in the top-down direction, the movement information in which the south-north direction is the axis, the movement information in which the east-west direction is the axis, and movement information in which the top-down direction is the axis.

Each of the movement information constituting the rhythm information is a detected value detected in the additional electronic device 100, or an index (level) corresponding to the detected value. For example, the index corresponding to the detected value may be a three-step level of fast movement, normal movement, and slow movement with regard to the cycle, and may be a three-step level of large movement, normal movement, and small movement with regard to the amplitude. The data amount of the transmitted and received rhythm information and the amount of processing for the calculation of the degree of similarity are smaller in a case where the index corresponding to the detected value is used than in a case where the detected value is used.

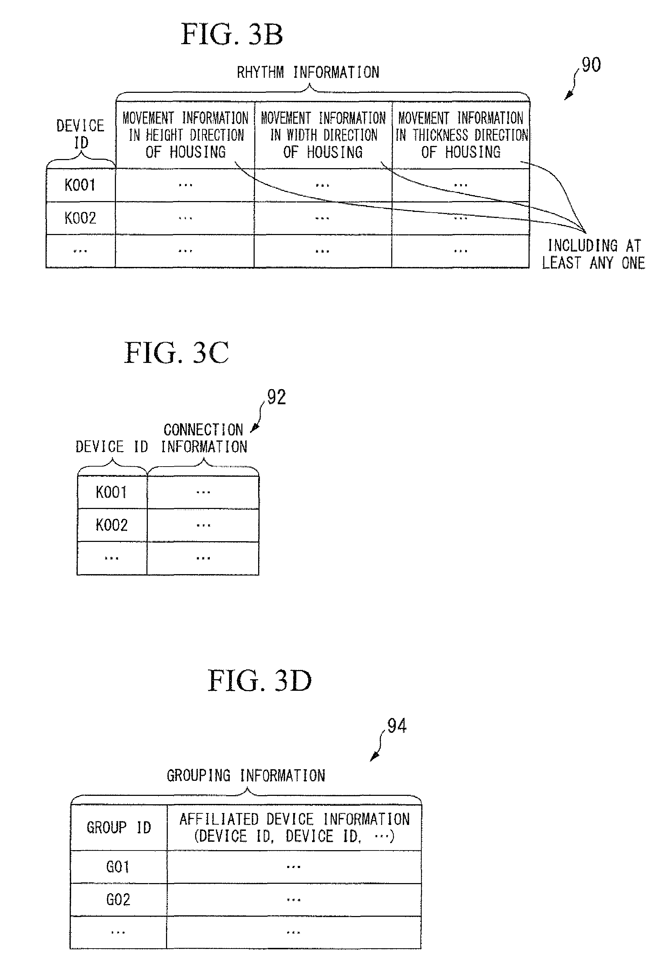

The acquisition unit 10 (the reception unit 12) that acquires the rhythm information stores the acquired (received) rhythm information in the rhythm information storage unit 90. For example, as shown in FIG. 3B, the acquisition unit 10 stores the rhythm information in association with the device ID.

The acquisition unit 10 that acquires the rhythm information stores the connection information acquired along with the rhythm information in the connection information storage unit 92. For example, as shown in FIG. 3C, the acquisition unit 10 stores the connection information in association with the device ID. In a case where the connection information of the additional electronic device 100 is already acquired (exchanged) along with the device ID before the rhythm information is acquired from one of the additional electronic devices 100, the acquisition unit 10 stores the connection information in association with the device ID at the time of the acquisition (exchange).

The calculation unit 20 calculates the degree of similarity between the rhythm information of the plurality of additional electronic devices 100 acquired by the acquisition unit 10. In other words, the calculation unit 20 calculates the degree of similarity between the rhythm information of the respective electronic devices 100 stored in the rhythm information storage unit 90. Namely, the calculation unit 20 calculates the degree of similarity between the rhythm information of the first additional electronic device 100 (one of the electronic devices 100) and the rhythm information of the second additional electronic device 100 (the electronic device 100 other than the one ofthe electronic devices 100).

Specifically, for example, the calculation unit 20 calculates the degree of similarity between the respective movement information of the same type constituting the rhythm information, and calculates the degree of similarity between the rhythm information of the first additional electronic device 100 and the rhythm information of the second additional electronic device based on the degree of similarity between the plurality of pieces of the respective movement information of the same type. For example, in a case where the rhythm information is constituted by the three pieces of movement information of the movement information in the height direction of the housing, the movement information in the width direction of the housing, and the movement information in the thickness direction of the housing as shown in FIG. 3A, the calculation unit 20 calculates the degree of similarity between the movement information in the height direction of the housing of the first additional electronic device 100 and the movement information in the height direction of the housing of the second additional electronic device 100, calculates the degree of similarity between the movement information in the width direction of the housing of the first additional electronic device 100 and the movement information in the width direction of the housing of the second additional electronic device 100, calculates the degree of similarity between the movement information in the thickness direction of the housing of the first additional electronic device 100 and the movement information in the thickness direction of the housing of the second additional electronic device 100, and calculates the degree of similarity between the rhythm information of the first additional electronic device 100 and the rhythm information of the second additional electronic device based on the degree of similarity between the three pieces of movement information.

Various calculation methods are considered as the methods for calculating the degree of similarity between the respective movement information in the height direction of the housing (as is the case with the movement information in the width direction of the housing and the movement information in the thickness direction of the housing). As an example, the calculation unit 20 may compare a value of the movement information (for example, the cycle) in the height direction of the housing of the first additional electronic device 100 with a value of the movement information (for example, the cycle) in the height direction of the housing of the second additional electronic device 100, and the value obtained by dividing the smaller value by the larger value may be the degree of similarity between the movement information in the height direction of the housing. In a case where the calculation method is used, the degree of similarity between the respective movement information in the height direction of the housing is within a range of between zero and one and becomes closer to one as the similarity increases.

Various calculation methods are considered as the methods for calculating the degree of similarity between the rhythm information of the first additional electronic device 100 and the rhythm information of the second additional electronic device based on the degree of similarity between the respective movement information of the same type constituting the rhythm information. As an example, the calculation unit 20 may calculate the average value of the degree of similarity between the respective movement information as the degree of similarity between the rhythm information of the first additional electronic device 100 and the rhythm information of the second additional electronic device. In other words, in the above-described example, the calculation unit 20 may calculate the average value of the degree of similarity between the movement information in the height direction of the housing, the degree of similarity between the movement information in the width direction of the housing, and the degree of similarity between the movement information in the thickness direction of the housing as the degree of similarity between the rhythm information of the first additional electronic device 100 and rhythm information of the second additional electronic device. In a case where the calculation method is used, the degree of similarity between the rhythm information of the first additional electronic device 100 and the rhythm information of the second additional electronic device is within a range of between zero and one and becomes closer to one as the similarity increases.

During the calculation of the above-described average value, the average value may be calculated after weighting the degree of similarity between the predetermined respective movement information. The average value is not limited to an arithmetic mean, but a geometric mean may be used. Instead of the average value, the median value of the degree of similarity between the respective movement information, the maximum value of the degree of similarity between the respective movement information, and the minimum value of the degree of similarity between the respective movement information may be the degree of similarity between the rhythm information of the first additional electronic device 100 and rhythm information of the second additional electronic device may be used.

A timing at which the calculation unit 20 starts the calculation of the degree of similarity is not particularly limited. For example, the calculation unit 20 may calculate the degree of similarity when an operation reception unit (not shown) receives a predetermined user operation.

As described above, the calculation unit 20 that calculates the degree of similarity between the rhythm information of the plurality of additional electronic devices 100 outputs the result of the calculation of the degree of similarity to the grouping unit 30.

The grouping unit 30 groups the plurality of additional electronic devices 100 (in other words, the grouping unit generates grouping information (described later) that is the result of the grouping) based on the degree of similarity between the rhythm information of the plural ity of additional electronic devices 100 calculated by the calculation unit 20 (result of the calculation of the degree of similarity). More specifically, in a case where the degree of similarity between the rhythm information of the first additional electronic device 100 and the rhythm information of the second additional electronic device calculated by the calculation unit 20 is equal to or higher than a predetermined threshold, the grouping unit 30 groups the first additional electronic device 100 and the second additional electronic device 100 into the same group.

For example, with regard to the electronic devices A, B, and C, the grouping unit 30 groups the electronic devices A, B, and C into the same group in a case where the degree of similarity between the rhythm information of the electronic devices A and B is equal to or higher than the predetermined threshold, the degree of similarity between the rhythm information of the electronic devices A and C is equal to or higher than the predetermined threshold, and the degree of similarity between the rhythm information of the electronic devices B and C is equal to or higher than the predetermined threshold. Namely, even if both the degree of similarity between the rhythm information of the electronic devices A and B and the degree of similarity between the rhythm information of the electronic devices B and C are equal to or higher than the predetermined threshold, the grouping unit 30 does not group the electronic devices A, B, and C into the same group in a case where the degree of similarity between the rhythm information of the electronic devices A and C is not equal to or higher than the predetermined threshold.

The grouping unit 30 may compare the degree of similarity between the rhythm information of the electronic devices A and B with the degree of similarity of the rhythm information of the electronic devices B and C and group either one of the electronic device A or the electronic device C and the electronic device B into the same group in a case where both the degree of similarity between the rhythm information of the electronic devices A and B and the degree of similarity between the rhythm information of the electronic devices B and C are equal to or higher than the predetermined threshold and the degree of similarity between the rhythm information of the electronic devices A and C is not equal to or higher than the predetermined threshold. In other words, the electronic devices A and B may be grouped into the same group in a case where the degree of similarity between the rhythm information of the electronic devices A and B is higher than the degree of similarity between the rhythm information of the electronic devices B and C, and the electronic devices B and C may be grouped into the same group in a case where the degree of similarity between the rhythm information of the electronic devices B and C is higher than the degree of similarity between the rhythm information of the electronic devices A and B.

A timing at which the grouping unit 30 starts the grouping of the plurality of additional electronic devices 100 is not particularly limited. For example, the grouping unit 30 may perform the grouping when the result of the calculation of the degree of similarity is acquired from the calculation unit 20.

As described above, the grouping unit 30 that groups the plurality of additional electronic devices 100 stores the grouping information in the grouping information storage unit 94. For example, as shown in FIG. 3D, the grouping unit 30 stores a group ID and affiliated device information as the grouping information in association with each other in the grouping information storage unit 94. The group ID is identification information for identifying each group. The affiliated device information is information including the device ID for identifying the electronic device 100 affiliated with the group (in other words, the electronic device 100 grouped into the group).

The display unit 40 displays a variety of information. For example, the display unit 40 displays the connection information for communicating with the electronic device 100 grouped into the same group by the grouping unit 30. Specifically, the display unit 40 displays the device ID of the additional electronic device 100 grouped into each group and the connection information for communicating with the additional electronic device 100 by referring to the connection information storage unit 92 and the grouping information storage unit 94. The display unit 40 may display only the device ID for each group without displaying the connection information.

A timing at which the display unit 40 starts the display of the grouping information and the connection information is not particularly limited. For example, the display unit 40 may display the grouping information and the connection information when the grouping information is stored in the grouping information storage unit 94. Also, the display unit 40 may display the grouping information and the connection information when the operation reception unit (not shown) receives a predetermined user operation.

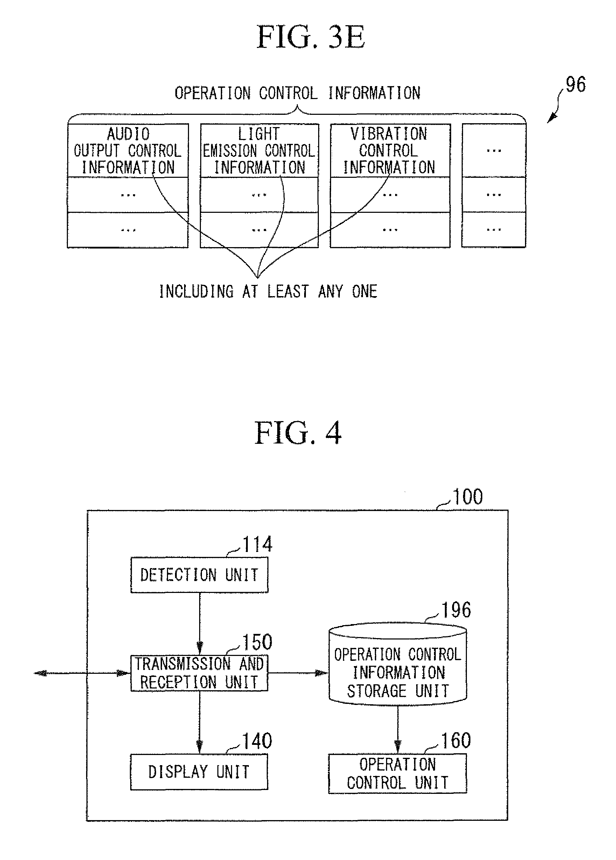

Also, the display unit 40 displays operation control information stored in the operation control information storage unit 96. FIG. 3E is an example of the operation control information stored in the operation control information storage unit 96.

The operation control information is control information for controlling the operation of the electronic devices 1 and 100, and, as shown in FIG. 3E, includes at least one of the control information among audio output control information for audio output control, light emission control information for light emission control, and vibration control information for vibration control. Each of the control information (the audio output control information, the light emission control information, and the vibration control information) includes a plurality of settable values (or settable ranges). The operation control information shown in FIG. 3E is an example, and may include other control information for controlling another operation of the electronic devices 1 and 100.

A timing at which the display unit 40 starts the display of the operation control information is not particularly limited. For example, the display unit 40 may display the operation control information when the operation reception unit (not shown) receives a predetermined user operation. For example, the display unit 40 may display a button (corresponding to the operation reception unit) for confirming the transmitted value (set value) before the transmission unit 50 transmits the operation control information, and the transmitted value may be displayed before the transmission by the pressing of the button.

The transmission unit 50 transmits a variety of information. For example, the transmission unit 50 transmits the grouping information to the additional electronic device 100. Specifically, the transmission unit 50 transmits the device ID of the additional electronic device 100 belonging to each group to each of the additional electronic devices 100 grouped into each group by referring to the grouping information storage unit 94.

Also, the transmission unit 50 transmits the operation control information to the additional electronic device 100 so that the plurality of electronic devices 100 grouped into the same group by the grouping unit 30 audio-output in the same manner, emit light in the same manner, or vibrate in the same manner. Specifically, the transmission unit 50 transmits the operation control information to each of the additional electronic devices 100 grouped into each group by referring to the connection information storage unit 92, grouping information storage unit 94, and the operation control information storage unit 96 so that each of the additional electronic devices 100 grouped into each group audio-outputs in the same manner, emits light in the same manner, or vibrates in the same manner.

For example, the transmission unit 50 transmits the audio output control information having the same set value (for example, set value a) to each of the plurality of electronic devices 100 grouped into a group G₁, and transmits the audio output control information having the same set value (for example, set value b) to each of the plurality of electronic devices 100 grouped into a group G₂. In this manner, each of the electronic devices 100 grouped into the group G₁ outputs audio according to the control by the set value a, and each of the electronic devices 100 grouped into the group G₂ outputs audio according to the control by the set value b, as is the case with the transmission of the light emission control information or the vibration control information,

A timing at which the transmission unit 50 starts the transmission of the operation control information is not particularly limited. For example, the transmission unit 50 may transmit the operation control information when the operation reception unit (not shown) receives a predetermined user operation.

The operation control unit 60 controls various operations based on the operation control information stored in the operation control information storage unit 96. For example, the control is performed so that audio is output according to the set value set by a setting unit (not shown) among the settable values of the audio output control information, the control is performed so that light is emitted according to the set value set by the setting unit (not shown) among the settable values of the light emission control information, and the control is performed so that vibration is made according to the set value set by the setting unit (not shown) among the settable values of the vibration control information.

The setting unit (not shown) stores the set values in the operation control information storage unit 96 when the operation reception unit (not shown) receives a user operation for specifying the set values.

Next, the additional electronic device 100 that is the target of the grouping by the electronic device 1 will be described. FIG. 4 is a configuration diagram showing an example of an additional electronic device 100. As shown in FIG. 4, the additional electronic device 100 includes a detection unit 114, a display unit 140, a transmission and reception unit 150, an operation control unit 160, and an operation control information storage unit 196.

The detection unit 114 detects the movement of the housing of the electronic device 100. In other words, the detection unit 114 acquires the movement information. For example, the detection unit 114 acquires at least one of the movement information among the movement information in the height direction of the housing, the movement information in the width direction of the housing, the movement information in the thickness direction of the housing, the movement information in which the height direction of the housing is the axis, the movement information in which the width direction of the housing is the axis, the movement information in which the thickness direction of the housing is the axis, the movement information in the south-north direction, the movement information in the east-west direction, the movement information in the top-down direction, the movement information in which the south-north direction is the axis, the movement information in which the east-west direction is the axis, and the movement information in which the top-down direction is the axis.

The detection unit 114 that acquires the movement information outputs the acquired detected value of the movement information to the transmission and reception unit 150 as the rhythm information. The detection unit 114 may calculate the index corresponding to the above-described detected value, and may output the index to the transmission and reception unit 150 as the rhythm information.

The transmission and reception unit 150 transmits and receives a variety of information between the additional electronic device (the electronic device 1 and the additional electronic device 100) and the transmission and reception unit. For example, the transmission and reception unit 150 transmits the rhythm information acquired from the detection unit 114 to the electronic device 1 along with the device ID of the electronic device 100 and the connection information.

In a case where the connection information is already transmitted to (exchanged with) the electronic device 1 along with the device ID before the transmission of the rhythm information of the electronic device 1, the transmission and reception unit 150 may not transmit the connection information along with the rhythm information.

Also, for example, the transmission and reception unit 150 receives the grouping information from the electronic device 1. In a case where the grouping information is received, the transmission and reception unit 150 outputs the received grouping information to the display unit 140.

Also, for example, the transmission and reception unit 150 receives the operation control information including the set value from the electronic device 1. In a case where the operation control information is received, the transmission and reception unit 150 stores (updates) the set value of the operation control information in the operation control information storage unit 196 via the setting unit (not shown). The operation control information storage unit 196 has the same configuration as the operation control information storage unit 96 of the electronic device 1 (refer to FIG. 3E).

The display unit 140 displays a variety of information. For example, the grouping information and the operation control information received from the electronic device 1 are displayed.

The operation control unit 160 controls various operations based on the operation control information stored in the operation control information storage unit 196. For example, the control is performed so that audio is output according to the set value set by the setting unit (not shown) among the settable values of the audio output control information, the control is performed so that light is emitted according to the set value set by the setting unit (not shown) among the settable values of the light emission control information, and the control is performed so that vibration is made according to the set value set by the setting unit (not shown) among the settable values of the vibration control information.

Namely, the additional electronic device 100 that receives the operation control information (set value) transmitted from the electronic device 1 operates according to the operation control information (set value). Therefore, the plurality of electronic devices audio-output in the same manner if the audio output control information having the same set value is transmitted to the plurality of electronic devices 100 grouped into the same group, the plurality of electronic devices emit light in the same manner if the light emission control information having the same set value is transmitted, and the plurality of electronic devices vibrate in the same manner if the vibration control information having the same set value is transmitted.

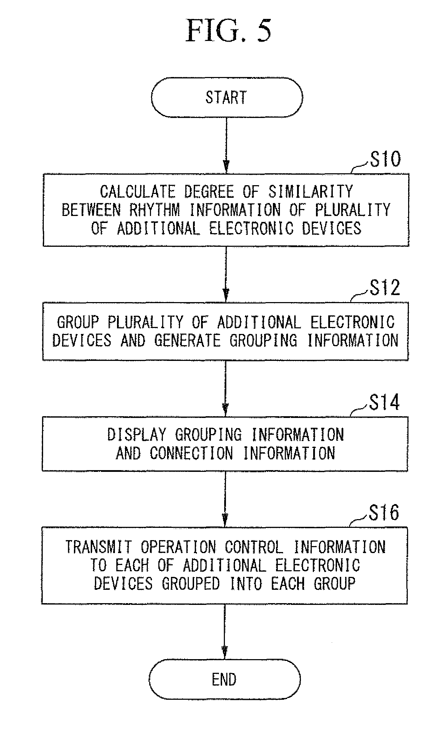

FIG. 5 is a flowchart showing an example of operation of the electronic device 1. When the flowchart shown in FIG. 5 starts, the rhythm information of the plurality of additional electronic devices 100 is stored in the rhythm information storage unit 90, and the connection information of the plurality of additional electronic devices 100 is stored in the connection information storage unit 92.

In FIG. 5, the calculation unit 20 calculates the degree of similarity between the rhythm information of the plurality of additional electronic devices 100 stored in the rhythm information storage unit 90 (step S10). The calculation unit 20 outputs the result of the calculation of the degree of similarity to the grouping unit 30.

The grouping unit 30 groups the plurality of additional electronic devices 100 and generates the grouping information based on the result of the calculation of the degree of similarity by the calculation unit 20 (step S 12). The grouping unit 30 stores the grouping information in the grouping information storage unit 94. The grouping unit 30 informs the display unit 40 that the grouping information is stored in the grouping information storage unit 94.

The display unit 40 displays the grouping information and the connection information (step S14). Specifically, the display unit 40 displays the device ID of the additional electronic device 100 grouped into each group and the connection information for communicating with the additional electronic device 100 by referring to the connection information storage unit 92 and the grouping information storage unit 94.

The transmission unit 50 transmits the operation control information to each of the additional electronic devices 100 grouped into each group by referring to the connection information storage unit 92, grouping information storage unit 94, and the operation control information storage unit 96 so that each of the additional electronic devices 100 grouped into each group audio-outputs in the same manner, emits light in the same manner, or vibrates in the same manner (step S16). Then, the flowchart ends. The transmission unit 50 may transmit the operation control information when the operation reception unit (not shown) receives a predetermined user operation.

Next, the aspect shown in FIG. 1B (the aspect in which the grouping targets are the plurality of electronic devices (the electronic device 1 and the electronic devices 100), including the main electronic device 1) will be described.

As shown in FIG. 2C, the only difference between the configuration ofthe electronic device 1 according to the aspect shown in FIG. 1B and the configuration of the electronic device 1 according to the above-described aspect shown in FIG. 1A is that the detection unit 14 is provided in addition to the reception unit 12. The description hereinafter will focus on the difference (the detection unit 14).

The acquisition unit 10 acquires the rhythm information representing the movement of the housing of the additional electronic device 100 and rhythm information representing a movement of a housing of the main electronic device 1. Specifically, as shown in FIG. 3A, the reception unit 12 receives the rhythm information of the additional electronic device 100 along with the device ID and the connection information of the additional electronic device 100 from each of the additional electronic devices 100, and the detection unit 14 acquires the rhythm information representing the movement of the housing of the main electronic device 1. The detection unit 14 detects the movement of the housing of the main electronic device 1 in the same manner as the detection unit 114 of the additional electronic device 100.

The acquisition unit 10 (the reception unit 12 and the detection unit 14) that acquires the rhythm information stores the acquired (received, detected) rhythm information in the rhythm information storage unit 90.

The calculation unit 20 calculates the degree of similarity between the rhythm information of the plurality of electronic devices (the main electronic device 1 and the additional electronic device 100) acquired by the acquisition unit 10. Namely, the calculation unit 20 calculates the degree of similarity between the rhythm information of the electronic device 1 detected by the detection unit 14 and the rhythm information of the additional electronic device 100 received by the reception unit 12. The calculation unit 20 may calculate the degree of similarity of the rhythm information between the additional electronic devices 100 received by the reception unit 12.

In a case where the degree of similarity between the rhythm information of the electronic device 1 and the rhythm information of the additional electronic device 100 calculated by the calculation unit 20 is equal to or higher than the predetermined threshold, the grouping unit 30 groups the electronic device 1 and the additional electronic device 100 into the same group. In a case where the degree of similarity between the rhythm information of the additional electronic devices 100 is equal to or higher than the predetermined threshold, the grouping unit 30 may group the additional electronic devices 100 into the same group.

In a case where the main electronic device 1 is grouped into any group by the grouping unit 30, processing is performed so that the main electronic device 1 grouped into the group and at least one of the additional electronic devices 100 audio-output in the same manner, emit light in the same manner, or vibrate in the same manner. For example, the transmission unit 50 may transmit the same value as the set value stored in the operation control information storage unit 96 (set value of the main electronic device 1) to the additional electronic device 100, and the setting unit (not shown) may store the value transmitted by the transmission unit 50 to the additional electronic device 100 (set value with respect to the additional electronic device 100) in the operation control information storage unit 96 as the set value of the main electronic device 1.

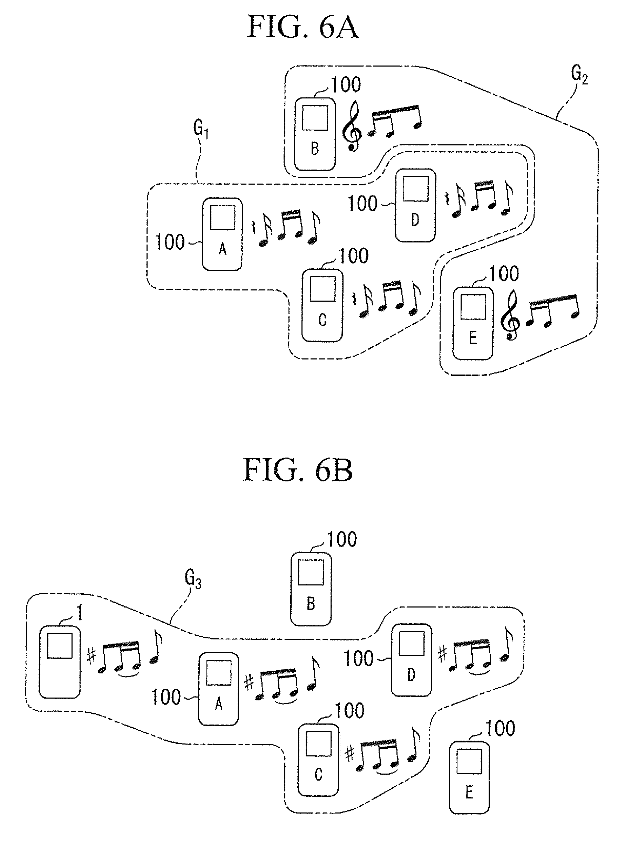

FIGS. 6A to 6C are schematic diagrams showing results of the grouping by the electronic device 1.

FIG. 6A is the result of the grouping according to the aspect shown in FIG. 1A. The electronic device 1 groups the three units of the electronic devices 100 (the electronic devices A, C, and D) among the five units of the additional electronic devices 100 (the electronic devices A to E) into the group G₁ and groups the two units of the electronic devices (the electronic devices B and E) into the group G₂ so that the electronic devices grouped into G₁ (the electronic devices A, C, and D) output audio in the same manner and the electronic devices grouped into G₂ (the electronic devices B and E) output audio in the same manner. Namely, the plurality of additional electronic devices 100 can be grouped conveniently by the electronic device 1, and the plurality of additional electronic devices 100 in the same group can output audio in the same manner, emit light in the same manner, or vibrate in the same manner.

FIG. 6B is the result of the grouping according to the aspect shown in FIG. 1B. The electronic device 1 groups the four units of the electronic devices (the main electronic device 1 and the electronic devices A, C, and D) among the main electronic device 1 and the five units of the electronic devices (the electronic devices A to E) into a group G₃ so that the electronic devices grouped into G₃ (the main electronic device 1 and the electronic devices A, C, and D) output audio in the same manner. Namely, the plurality of additional electronic devices 100 in the same group as the main electronic device 1 can be grouped conveniently by the electronic device 1, and the plurality of additional electronic devices in the same group can output audio in the same manner, emit light in the same manner, or vibrate in the same manner.

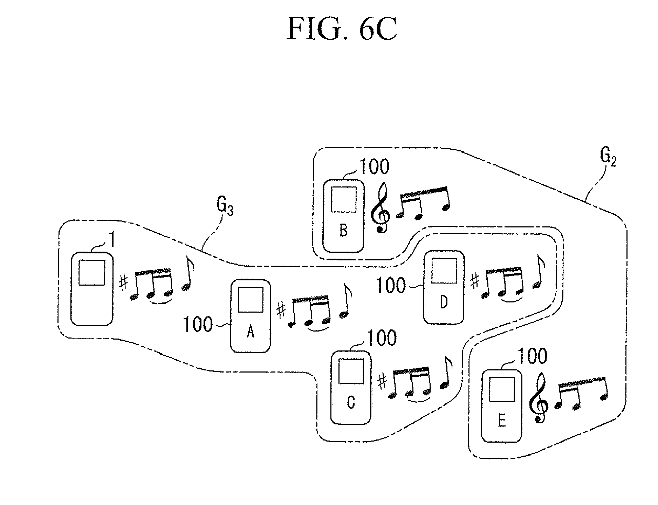

FIG. 6C is the result of the grouping according to the aspect shown in FIG. 1B. The electronic device I groups the four units of the electronic devices (the main electronic device 1 and the electronic devices A, C, and D) among the main electronic device 1 and the five units of the electronic devices (the electronic devices A to E) into the group G₃ and groups the two units of the electronic devices (the electronic devices B and E) into the group G₂ so that the electronic devices grouped into G₃ (the main electronic device 1 and the electronic devices A, C, and D) output audio in the same manner and the electronic devices grouped into G₂ (the electronic devices B and E) output audio in the same manner. Namely, the plurality of additional electronic devices 100 in the same group as the main electronic device 1 can be grouped conveniently and the plurality of additional electronic devices 100 not in the same group as the main electronic device 1 can be grouped conveniently by the electronic device 1, and the plurality of electronic devices in the same group can output audio in the same manner, emit light in the same manner, or vibrate in the same manner.

### [Second Embodiment]

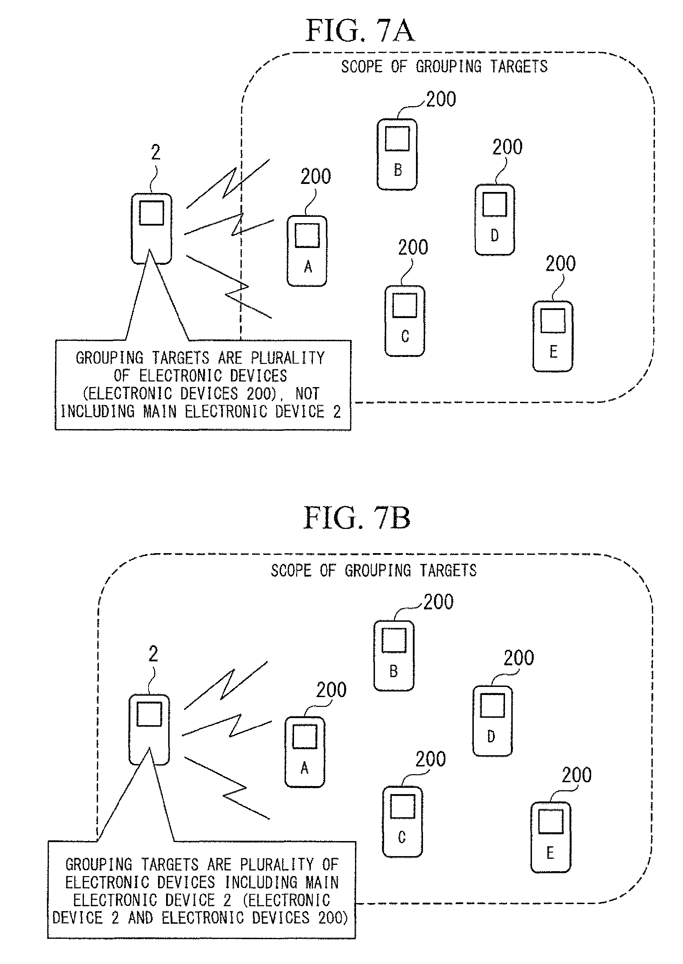

Hereinafter, another embodiment of the present invention will be described referring to the accompanying drawings. FIGS. 7A and 7B are schematic diagrams showing an overview of processing by an electronic device 2 according to a second embodiment of the present invention. The same or similar reference numerals are used in the same or similar components as in the above-described embodiment, and the description will be simplified or omitted for convenience.

The electronic device 2 (for example, a portable electronic device) groups a plurality of electronic devices (for example, portable electronic devices).

For example, as shown in FIG. 7A, the electronic device 2 groups a plurality of additional electronic devices 200 that are present in the vicinity of the main electronic device 2. In other words, as shown with the dashed line, the grouping targets of the main electronic device 2 are the plurality of electronic devices 200, excluding the main electronic device 2.

As another example, as shown in FIG. 7B, the electronic device 2 groups the main electronic device 2 and the plurality of additional electronic devices 200 that are present in the vicinity of the main electronic device 2. In other words, as shown with the dashed line, the grouping targets of the main electronic device 2 are the plurality of electronic devices (the electronic device 2 and the electronic devices 200), including the main electronic device 2.

The electronic device 2 and each of the plurality of additional electronic devices 200 automatically exchange connection information (described later) with each other via communication when the electronic devices approach each other within a predetermined distance.

Hereinafter, the aspect shown in FIG. 7A (the aspect in which the grouping targets are the plurality of electronic devices 200, excluding the main electronic device 2) will be described. The aspect shown in FIG. 7B (the aspect in which the grouping targets are the plurality of electronic devices (the electronic device 2 and the electronic devices 200), including the main electronic device 2) will be described later.

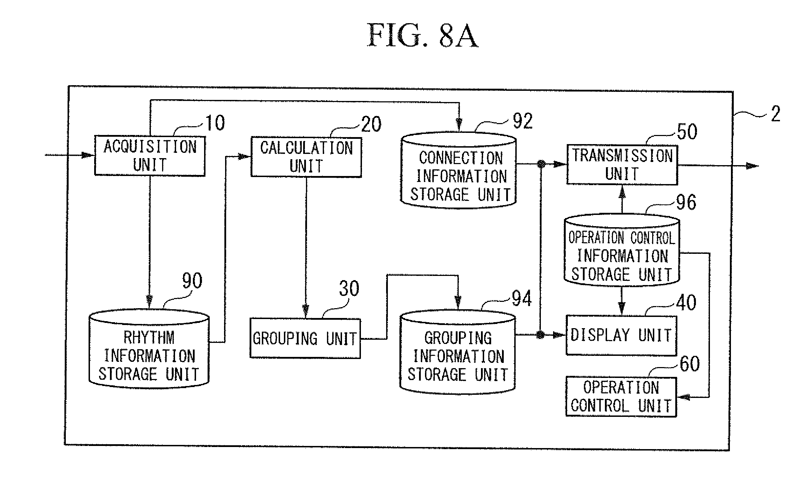

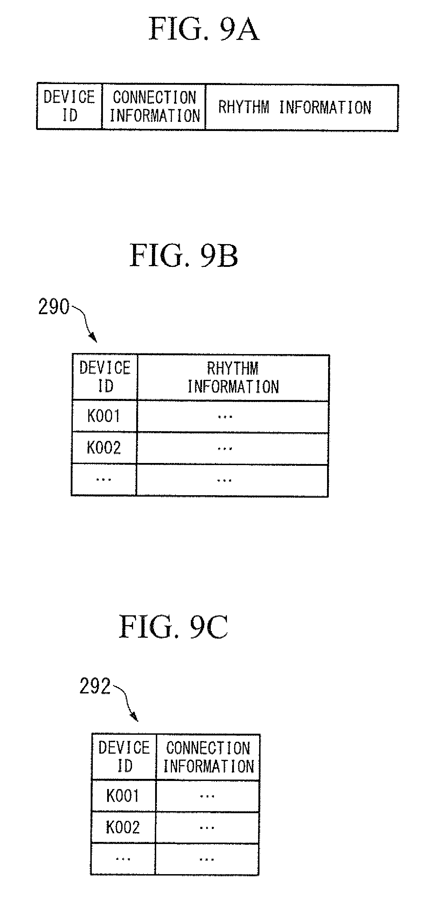

FIGS. 8A to 8D are configuration diagrams showing examples of the electronic device 2. FIG. 9A to 9E are examples of information acquired or stored by the electronic device 2. As shown in FIG. 8A, the electronic device 2 includes the acquisition unit 10, the calculation unit 20, the grouping unit 30, the display unit 40, the transmission unit 50, the operation control unit 60, a rhythm information storage unit 290, a connection information storage unit 292, a grouping information storage unit 294, and an operation control information storage unit 296.

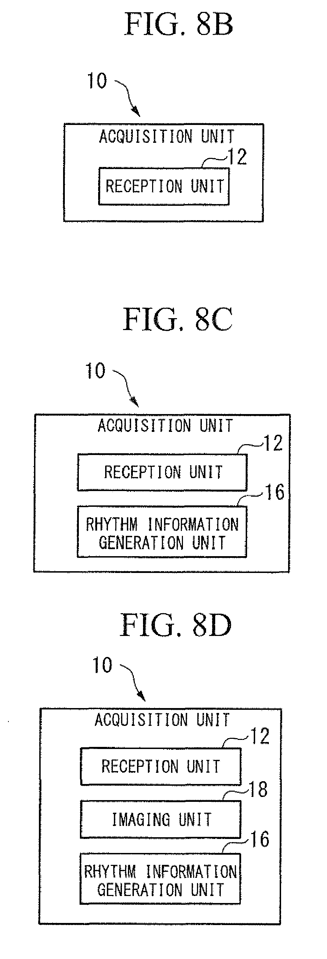

As shown in FIG. 8B, the acquisition unit 10 has the reception unit 12. As shown in FIG. 8C, the acquisition unit 10 may have a rhythm information generation unit 16 in addition to the reception unit 12. Also, as shown in FIG. 8D, the acquisition unit 10 may have an imaging unit 18 and the rhythm information generation unit 16 in addition to the reception unit 12. In the case of the aspect shown in FIG. 7A, the imaging unit 18 and the rhythm information generation unit 16 are optional, and the description will be made on the assumption that the imaging unit 18 and the rhythm information generation unit 16 are absent.

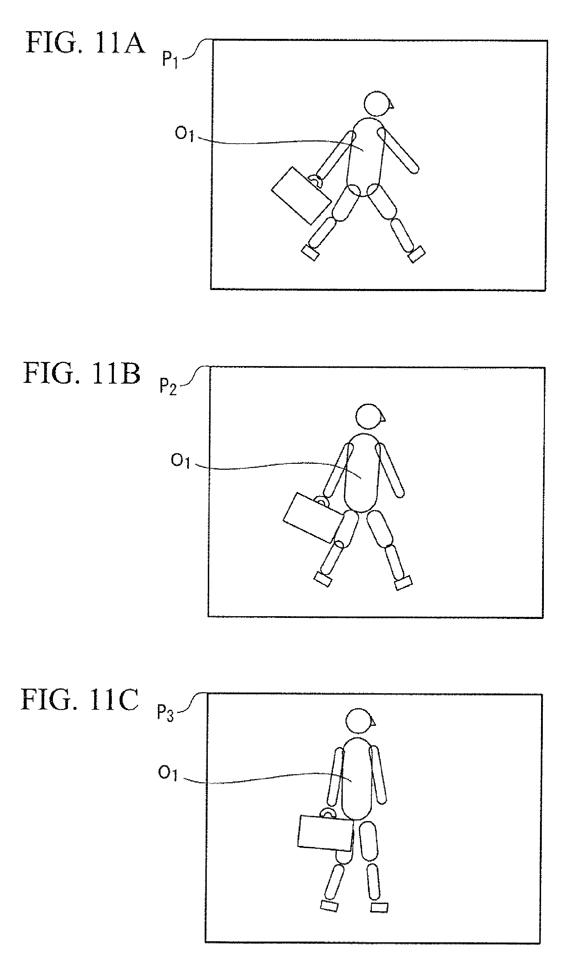

The acquisition unit 10 acquires rhythm information representing the pattern of temporal or spatial change of an object in a captured image captured by the additional electronic device 200. Specifically, as shown in FIG. 9A, the reception unit 12 in the acquisition unit 10 receives the rhythm information of the object in the captured image captured by the additional electronic device 200 along with a device ID and the connection information of the additional electronic device 200 from each of the additional electronic devices 200. The device ID is identification information for identifying each of the electronic devices 200. The connection information is information for communicating with each of the electronic devices 200, and examples thereof include protocol-related information and address information. The rhythm information will be described in detail referring to FIGS. 11A to 17D.

In a case where one of the additional electronic devices 200 does not transmit the connection information along with the rhythm information to the electronic device 2 (for example, in a case where the connection information of the additional electronic device 200 is already transmitted to (exchanged with) the electronic device 2 along with the device ID before the transmission of the rhythm information), the reception unit 12 receives the rhythm information of the additional electronic device 200 along with the device ID of the additional electronic device 200. In other words, in the above-described case, the reception unit 12 does not receive the connection information along with the rhythm information.

The acquisition unit 10 (the reception unit 12) that acquires the rhythm information stores the acquired (received) rhythm information in the rhythm information storage unit 290. For example, as shown in FIG. 9B, the acquisition unit 10 stores the rhythm information in association with the device ID.

The acquisition unit 10 that acquires the rhythm information stores the connection information acquired along with the rhythm information in the connection information storage unit 292. For example, as shown in FIG. 9C, the acquisition unit 10 stores the connection information in association with the device ID. In a case where the connection information of the additional electronic device 200 is already acquired (exchanged) along with the device ID before the rhythm information is acquired from one of the additional electronic devices 200, the acquisition unit 10 stores the connection information in association with the device ID at the time of the acquisition (exchange).

The calculation unit 20 calculates the degree of similarity between the plurality of pieces of rhythm information stored in the rhythm information storage unit 290. In other words, the calculation unit 20 calculates the degree of similarity between the rhythm information of the object in the first additional captured image captured by the first additional electronic device 200 received by the reception unit 12 and the rhythm information of the object in the second additional captured image captured by the second additional electronic device 200 received by the reception unit 12. The calculation of the degree of similarity will be described in detail referring to FIGS. 11A to 17D.

A timing at which the calculation unit 20 starts the calculation of the degree of similarity is not particularly limited. For example, the calculation unit 20 may calculate the degree of similarity when the operation reception unit (not shown) receives a predetermined user operation.

As described above, the calculation unit 20 that calculates the degree of similarity outputs the result of the calculation of the degree of similarity to the grouping unit 30.

The grouping unit 30 groups the plurality of additional electronic devices 200 (in other words, the grouping unit generates grouping information (described later) that is the result of the grouping) based on the degree of similarity between the rhythm information calculated by the calculation unit 20 (result of the calculation of the degree of similarity). More specifically, in a case where the degree of similarity between the rhythm information of the object in the first additional captured image and the rhythm information of the object in the second additional captured image calculated by the calculation unit 20 is equal to or higher than a predetermined threshold, the grouping unit 30 groups the first additional electronic device 200 and the second additional electronic device 200 into the same group.

For example, with regard to the electronic devices A, B, and C, the grouping unit 30 groups the electronic devices A, B, and C into the same group in a case where the degree of similarity between the rhythm information of the object in the captured image captured by the electronic device A and the rhythm information of the object in the captured image captured by the electronic device B is equal to or higher than the predetermined threshold, the degree of similarity between the rhythm information of the object in the captured image captured by the electronic device A and the rhythm information of the object in the captured image captured by the electronic device C is equal to or higher than the predetermined threshold, and the degree of similarity between the rhythm information of the object in the captured image captured by the electronic device B and the rhythm information of the object in the captured image captured by the electronic device C is equal to or higher than the predetermined threshold.

Namely, even if the degree of similarity between the rhythm information of the object in the captured image captured by the electronic device A and the rhythm information of the object in the captured image captured by the electronic device B and the degree of similarity between the rhythm information of the object in the captured image captured by the electronic device B and the rhythm information of the object in the captured image captured by the electronic device C are equal to or higher than the predetermined threshold, the grouping unit 30 does not group the electronic devices A, B, and C into the same group in a case where the degree of similarity between the rhythm information of the object in the captured image captured by the electronic device A and the rhythm information of the object in the captured image captured by the electronic device C is not equal to or higher than the predetermined threshold.

The grouping unit 30 may compare the degree of similarity between the rhythm information of the object in the captured image captured by the electronic device A and the rhythm information of the object in the captured image captured by the electronic device B with the degree of similarity of the rhythm information of the object in the captured image captured by the electronic device B and the rhythm information of the object in the captured image captured by the electronic device C and group either one of the electronic device A or the electronic device C and the electronic device B into the same group in a case where the degree of similarity between the rhythm information of the object in the captured image captured by the electronic device A and the rhythm information of the object in the captured image captured by the electronic device C is equal to or higher than the predetermined threshold, the degree of similarity between the rhythm information of the object in the captured image captured by the electronic device B and the rhythm information ofthe object in the captured image captured by the electronic device C is equal to or higher than the predetermined threshold, and the degree of similarity between the rhythm information of the object in the captured image captured by the electronic device A and the rhythm information of the object in the captured image captured by the electronic device C is not equal to or higher than the predetermined threshold.

In other words, the grouping unit 30 may group the electronic devices A and B into the same group in a case where the degree of similarity between the rhythm information of the object in the captured image captured by the electronic device A and the rhythm information of the object in the captured image captured by the electronic device B is higher than the degree of similarity between the rhythm information of the object in the captured image captured by the electronic device B and the rhythm information of the object in the captured image captured by the electronic device C, may group the electronic devices B and C into the same group in a case where the degree of similarity between the rhythm information of the object in the captured image captured by the electronic device B and the rhythm information of the object in the captured image captured by the electronic device C is higher than the degree of similarity between the rhythm information of the object in the captured image captured by the electronic device A and the rhythm information of the object in the captured image captured by the electronic device B.

A timing at which the grouping unit 30 starts the grouping of the plurality of electronic devices 200 is not particularly limited. For example, the grouping unit 30 may perform the grouping when the result of the calculation of the degree of similarity is acquired from the calculation unit 20.

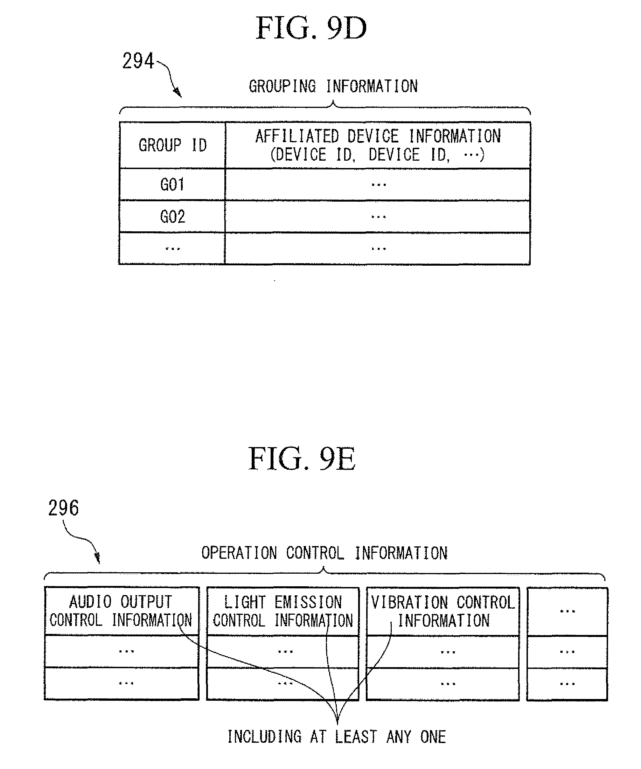

As described above, the grouping unit 30 that groups the plurality of additional electronic devices 200 stores the grouping information in the grouping information storage unit 294. For example, as shown in FIG. 9D, the grouping unit 30 stores a group ID and affiliated device information as the grouping information in association with each other in the grouping information storage unit 294. The group ID is identification information for identifying each group. The affiliated device information is information including the device ID for identifying the electronic device 200 affiliated with the group (in other words, the electronic device 200 grouped into the group).

The display unit 40 displays a variety of information. For example, the display unit 40 displays the connection information for communicating with the electronic device 200 grouped into the same group by the grouping unit 30. Specifically, the display unit 40 displays the device ID of the additional electronic device 200 grouped into each group and the connection information for communicating with the additional electronic device 200 by referring to the connection information storage unit 292 and the grouping information storage unit 294. The display unit 40 may display only the device ID for each group without displaying the connection information.

A timing at which the display unit 40 starts the above-described display is not particularly limited. For example, the display unit 40 may perform the display when the grouping information is stored in the grouping information storage unit 294. Also, the display unit 40 may perform the display when the operation reception unit (not shown) receives a predetermined user operation.

Also, the display unit 40 displays operation control information stored in the operation control information storage unit 296. FIG. 9E is an example of the operation control information stored in the operation control information storage unit 296.

The operation control information is control information for controlling the operation of the electronic devices 2 and 100, and, as shown in FIG. 9E, includes at least one of the control information among audio output control information for audio output control, light emission control information for light emission control, and vibration control information for vibration control. Each of the control information (the audio output control information, the light emission control information, and the vibration control information) includes a plurality of settable values (or settable ranges). The operation control information shown in FIG. 9E is an example, and may include other control information for controlling another operation of the electronic devices 2 and 100.

A timing at which the display unit 40 starts the display of the operation control information is not particularly limited. For example, the display unit 40 may display the operation control information when the operation reception unit (not shown) receives a predetermined user operation. For example, the display unit 40 may display a button (corresponding to the operation reception unit) for confirming the transmitted value (set value) before the transmission unit 50 transmits the operation control information, and the transmitted value may be displayed before the transmission by the pressing of the button.

The transmission unit 50 transmits a variety of information. For example, the transmission unit 50 transmits the grouping information to the additional electronic device 200. Specifically, the transmission unit 50 transmits the device ID of the additional electronic device 200 belonging to each group to each of the additional electronic devices 200 grouped into each group by referring to the grouping information storage unit 294.

Also, the transmission unit 50 transmits the operation control information to the additional electronic device 200 so that the plurality of electronic devices 200 grouped into the same group by the grouping unit 30 audio-output in the same manner, emit light in the same manner, or vibrate in the same manner. Specifically, the transmission unit 50 transmits the operation control information to each of the additional electronic devices 200 grouped into each group by referring to the connection information storage unit 292, grouping information storage unit 294, and the operation control information storage unit 296 so that each of the additional electronic devices 200 grouped into each group audio-outputs in the same manner, emits light in the same manner, or vibrates in the same manner.

For example, the transmission unit 50 transmits the audio output control information having the same set value (for example, set value a) to each of the plurality of electronic devices 200 grouped into the group G₁, and transmits the audio output control information having the same set value (for example, set value b) to each of the plurality of electronic devices 200 grouped into the group G₂. In this manner, each of the electronic devices 200 grouped into the group G₁ outputs audio according to the control by the set value a, and each of the electronic devices 200 grouped into the group G₂ outputs audio according to the control by the set value b, as is the case with the transmission of the light emission control information or the vibration control information.

A timing at which the transmission unit 50 starts the transmission of the operation control information is not particularly limited. For example, the transmission unit 50 may transmit the operation control information when the operation reception unit (not shown) receives a predetermined user operation.

The operation control unit 60 controls various operations based on the operation control information stored in the operation control information storage unit 296. For example, the control is performed so that audio is output according to the set value set by a setting unit (not shown) among the settable values of the audio output control information, the control is performed so that light is emitted according to the set value set by the setting unit (not shown) among the settable values of the light emission control information, and the control is performed so that vibration is made according to the set value set by the setting unit (not shown) among the settable values of the vibration control information.

The setting unit (not shown) stores the set values in the operation control information storage unit 296 when the operation reception unit (not shown) receives a user operation for specifying the set values.

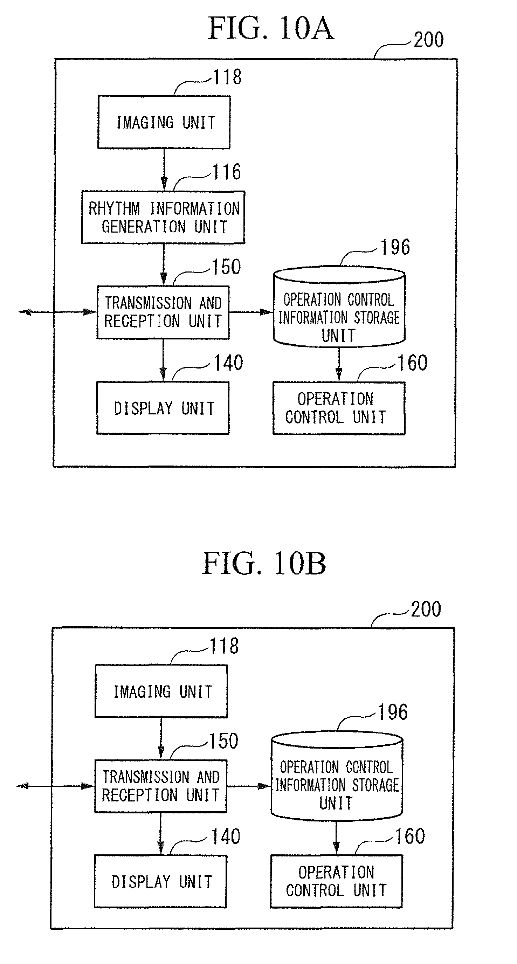

Next, the additional electronic device 200 that is the target of the grouping by the electronic device 2 will be described. FIGS. 10A and 10B are configuration diagrams showing examples of the additional electronic device 200. As shown in FIG. 10A, the additional electronic device 200 includes an imaging unit 118, a rhythm information generation unit 116, the display unit 140, the transmission and reception unit 150, the operation control unit 160, and the operation control information storage unit 196. FIG. 10B shows another configuration of the electronic device 200 (described later).

The imaging unit 118 captures a still image and a moving image. The rhythm information generation unit 116 extracts an object from the moving image captured by the imaging unit 118, and generates rhythm information of the object extracted from the moving image. The rhythm information generation unit 116 that generates the rhythm information outputs the generated rhythm information to the transmission and reception unit 150. The generation of the rhythm information by the rhythm information generation unit 116 (as is the case with the rhythm information generation unit 16 (described later)) will be described in detail referring to FIGS. 11A to 17D.

The transmission and reception unit 150 transmits and receives a variety of information between the additional electronic device (the electronic device 2 and the additional electronic device 200) and the transmission and reception unit. For example, the transmission and reception unit 150 transmits the rhythm information acquired from the rhythm information generation unit 116 to the electronic device 2 along with the device ID of the electronic device 200 and the connection information.

In a case where the connection information is already transmitted to (exchanged with) the electronic device 2 along with the device ID before the transmission of the rhythm information of the electronic device 2, the transmission and reception unit 150 may not transmit the connection information along with the rhythm information.

Also, for example, the transmission and reception unit 150 receives the grouping information from the electronic device 2. In a case where the grouping information is received, the transmission and reception unit 150 outputs the received grouping information to the display unit 140.

Also, for example, the transmission and reception unit 150 receives the operation control information including the set value from the electronic device 2. In a case where the operation control information is received, the transmission and reception unit 150 stores (updates) the set value of the operation control information in the operation control information storage unit 196 via the setting unit (not shown). The operation control information storage unit 196 has the same configuration as the operation control information storage unit 296 of the electronic device 2 (refer to FIG. 9E).

The display unit 140 displays a variety of information. For example, the grouping information and the operation control information received from the electronic device 2 are displayed.

The operation control unit 160 controls various operations based on the operation control information stored in the operation control information storage unit 196. For example, the control is performed so that audio is output according to the set value set by the setting unit (not shown) among the settable values of the audio output control information, the control is performed so that light is emitted according to the set value set by the setting unit (not shown) among the settable values of the light emission control information, and the control is performed so that vibration is made according to the set value set by the setting unit (not shown) among the settable values of the vibration control information.

Namely, the additional electronic device 200 that receives the operation control information (set value) transmitted from the electronic device 2 operates according to the operation control information (set value). Therefore, the plurality of electronic devices audio-output in the same manner if the audio output control information having the same set value is transmitted to the plurality of electronic devices 200 grouped into the same group, the plurality of electronic devices emit light in the same manner if the light emission control information having the same set value is transmitted, and the plurality of electronic devices vibrate in the same manner if the vibration control information having the same set value is transmitted.

In a case where the acquisition unit 10 of the electronic device 2 includes the rhythm information generation unit 16 (as shown in FIG. 8C or FIG. 8D), the electronic device 2 can generate the rhythm information. Therefore, as shown in FIG. 10B, the additional electronic device 200 may not include the rhythm information generation unit 116.

Namely, in a case where the acquisition unit 10 of the electronic device 2 includes the rhythm information generation unit 16 and the additional electronic device 200 includes the rhythm information generation unit 116, the transmission and reception unit 150 of the additional electronic device 200 transmits the moving image captured by the imaging unit 118 to the electronic device 2 along with the device ID of the electronic device 200 and the connection information. In the electronic device 2, the reception unit 12 receives the moving image from the additional electronic device 200 and the rhythm information generation unit 16 extracts the object from the moving image received by the reception unit 12, generates the rhythm information of the extracted object, and stores the rhythm information in the rhythm information storage unit 290 in association with the device ID.

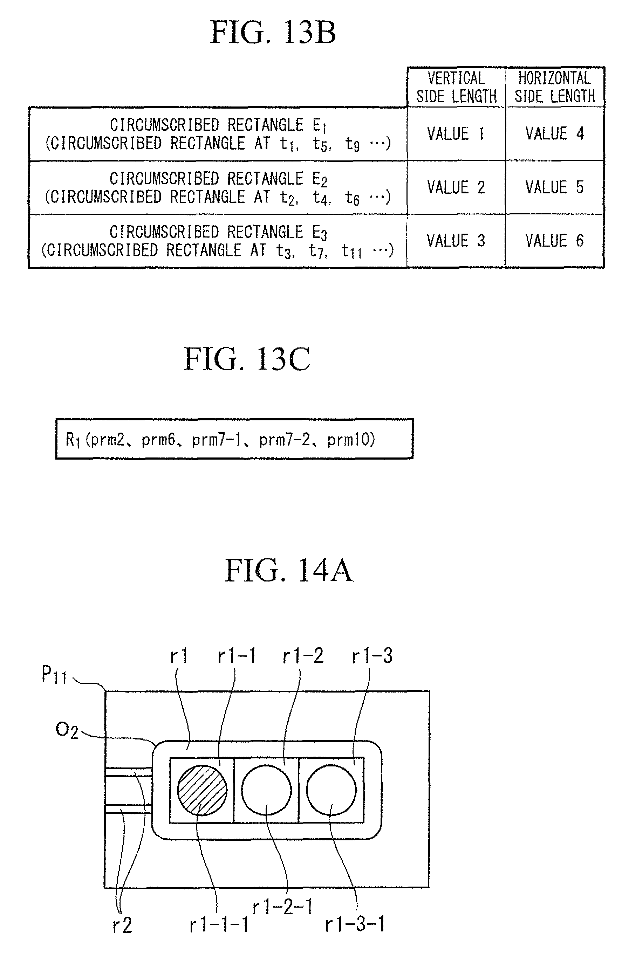

Hereinafter, the rhythm information representing the pattern of temporal or spatial change of the object, the generation of the rhythm information representing the pattern of temporal or spatial change of the object, and the calculation of the degree of similarity of the rhythm information representing the pattern of temporal or spatial change of the object will be described in detail referring to FIGS. 11A to 17D. Specifically, the rhythm information representing the pattern of temporal change of the object, the generation of the rhythm information representing the pattern of temporal change of the object, and the calculation of the degree of similarity of the rhythm information representing the pattern of temporal change of the object will be described in detail referring to FIGS. 11A to 13C, and then the rhythm information representing the pattern of spatial change of the object, the generation of the rhythm information representing the pattern of spatial change of the object, and the calculation of the degree of similarity of the rhythm information representing the pattern of spatial change of the object will be described in detail referring to FIGS. 14A to 17D.

FIGS. 11A to 13C are explanatory diagrams showing rhythm information representing the pattern of temporal change of the object, the generation of the rhythm information, and the calculation of the degree of similarity of the rhythm information.

The rhythm information generation unit 116 of the additional electronic device 200 (as is the case with the rhythm information generation unit 16 of the electronic device 2) extracts the object from the moving image and generates the rhythm information representing the pattern of temporal change of the object using the amount of change in the area of a circumscribed figure circumscribing the extracted object, the amount of change in the length of the long side or the short side, the amount of change in the aspect ratio, the cycle of change in the area, the cycle of change in the length, or the cycle of change in the aspect ratio.

For example, the rhythm information generation unit 116 uses the value of at least one parameter among the following examples of parameters 1 to 12 (hereinafter referred to prm1 to prm12) to generate the rhythm information representing the pattern of temporal change ofthe object. The predetermined time in prm1 to prm12 is, for example, the time based on the cycle of change (for example, one cycle) of a circumscribed rectangle.

Also, the long side and the short side in prm7-1 to prm9-2 are determined based on the length of a certain reference time (for example, the beginning of one cycle). Also, the Y-axis direction (or X-axis direction) may be the long side for convenience and simplification.

### (Parameters Constituting Rhythm Information)

prm1: Difference between the maximum area and the minimum area of the circumscribed rectangle within the predetermined time
prm2: Area ratio between the maximum area and the minimum area of the circumscribed rectangle within the predetermined time
prm3-1: Difference between the average area and the maximum area of the circumscribed rectangle within the predetermined time
prm3-2: Difference between the average area and the minimum area of the circumscribed rectangle within the predetermined time
prm4-1: Area ratio between the average area and the maximum area of the circumscribed rectangle within the predetermined time
prm4-2: Area ratio between the average area and the minimum area of the circumscribed rectangle within the predetermined time
prm5: Condition of distribution of the area of the circumscribed rectangle within the predetermined time (example: standard deviation)
prm6: Cycle of change in the area of the circumscribed rectangle within the predetermined time
prm7-1: The maximum amount of change of the long side of the circumscribed rectangle within the predetermined time
prm7-2: The maximum amount of change of the short side of the circumscribed rectangle within the predetermined time
prm8-1: Condition of distribution of the long side of the circumscribed rectangle within the predetermined time (example: standard deviation)
prm8-2: Condition of distribution of the short side of the circumscribed rectangle within the predetermined time (example: standard deviation)
prm9-1: Cycle of change of the long side of the circumscribed rectangle within the predetermined time
prm9-2: Cycle of change of the short side of the circumscribed rectangle within the predetermined time
prm10: The maximum amount of change in the aspect ratio of the circumscribed rectangle within the predetermined time
prm11: Condition of distribution of the aspect ratio of the circumscribed rectangle within the predetermined time (example: standard deviation)
prm12: Cycle of change in the aspect ratio of the circumscribed rectangle within the predetermined time

Hereinafter, a specific example will be used to describe the generation of the rhythm information by the rhythm information generation unit 116. P₁ shown in FIG. 11A is one frame constituting the moving image captured at a moment when a person (object O₁) is shaking both arms and both legs. P₃ shown in FIG. 11C is one frame constituting the moving image captured at a moment when both arms and legs of the person (object O₁) are directed downward during the shaking. P₂ shown in FIG. 11B is one frame between P₁ and P₃.

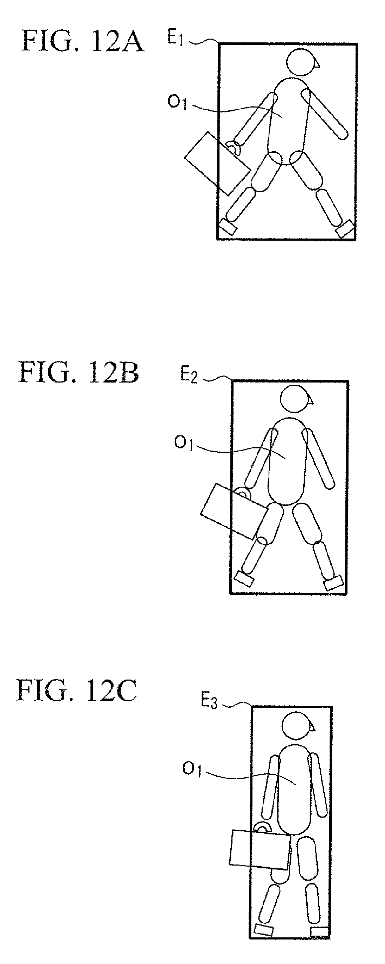

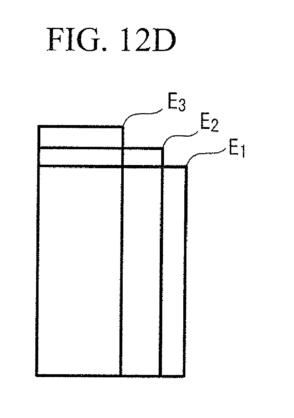

E₁ shown in FIG. 12A is the circumscribed rectangle circumscribing the object O₁ in P₁ shown in FIG. 11A. E₂ shown in FIG. 12B is the circumscribed rectangle circumscribing the object O₁ in P₂ shown in FIG. 11B. E₃ shown in FIG. 12C is the circumscribed rectangle circumscribing the object O₁ in P₃ shown in FIG. 11C. In FIG. 12D, the sizes of the circumscribed rectangles E₁, E₂, and E₃ are compared to each other. As shown in FIG. 12D, the shape of the circumscribed rectangle circumscribing the object changes as the object moves.

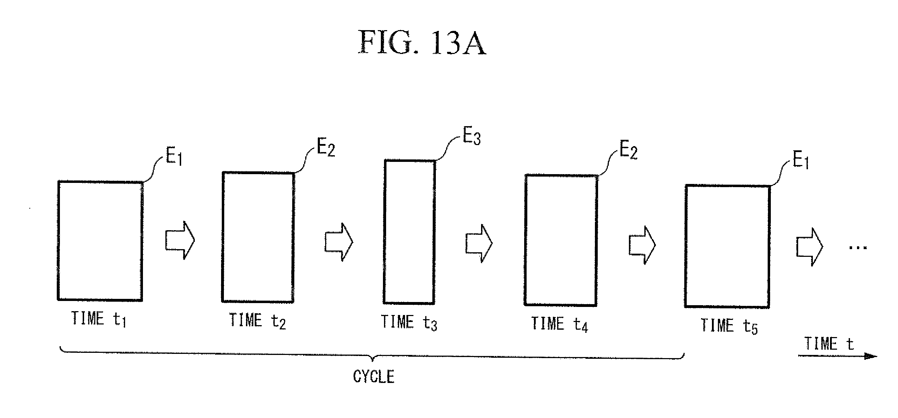

The calculation unit 20 sequentially extracts the object O₁ from the moving image (P₁, P₂, P₃ ...), sequentially extracts the circumscribed figure circumscribing the object O₁ as shown in FIG. 13A, and calculates the size of the sequentially extracted circumscribed rectangle as shown in FIG. 13B. The 'cycle' shown in FIG. 13A shows the cycle of change in the shape of the circumscribed rectangle. Namely, time t₁ to time t₄ (time t₅ to time t₈, time t₉ to time t₁₃ ...) constitute one cycle.

The rhythm information generation unit 116 calculates at least one of the predetermined parameters using the size of the circumscribed rectangle, and a group of values having each calculated parameter value as an element forms the rhythm information representing the pattern of temporal change of the object O₁. For example, as shown in FIG. 13C, the rhythm information generation unit 116 has the group of values whose elements are the area ratio between the maximum area and the minimum area of the circumscribed rectangle of the object O₁ (prm2), the cycle of change in the area (prm6), the maximum amount of change of the long side (prm7-1), the maximum amount of change of the short side (prm7-1), and the maximum amount of change in the aspect ratio (prm10) as the rhythm information R₁ (prm2, prm6, prm7-1, prm7-2, and prm10) representing the pattern of temporal change of the object O₁.

Then, to facilitate the comparison, the rhythm information may appropriately round off each parameter value and may replace each parameter value with another value (may turn into a score).

In a case where the rhythm information constituted by the group of values having each parameter value as the elements is generated by the rhythm information generation unit 116 as described above, the calculation unit 20 of the electronic device 2 calculates the degree of similarity between the rhythm information of the object in the first additional captured image captured by the first additional electronic device 200 and the rhythm information of the object in the second additional captured image captured by the second additional electronic device 200. Specifically, the calculation unit 20 calculates the degree of similarity between the same parameters constituting the rhythm information, and calculates the degree of similarity between the rhythm information of the object in the first additional captured image and the rhythm information of the object in the second additional captured image based on the degree of similarity between the same plurality of parameters.

For example, in a case where the rhythm information is constituted by prm2, prm6, prm7-1, prm7-2, and prm10, the calculation unit 20 calculates the degree of similarity between the prm2 values by comparing the prm2 value constituting the rhythm information of the object in the first additional captured image with the prm2 value constituting the rhythm information of the object in the second additional captured image. Likewise, the calculation unit 20 calculates the degree of similarity between the prm6 values, the degree of similarity between the prm7-1 values, the degree of similarity between the prm7-2 values, and the degree of similarity between the prm10 values.

Various calculation methods are considered as the methods for calculating the degree of similarity between the prm2 values (as is the case with prm6, prm7-1, prm7-2, and prm10 values). As an example, the calculation unit 20 may compare the prm2 value constituting the rhythm information of the object in the first additional captured image with the prm2 value constituting the rhythm information of the object in the first additional captured image and the value obtained by dividing the smaller value by the larger value may be the degree of similarity between the prm2 values. In a case where the calculation method is used, the degree of similarity between the parameter values is within a range of between zero and one and becomes closer to one as the similarity increases.

Various calculation methods are considered as the methods for calculating the degree of similarity between the rhythm information of the object in the first additional captured image and the rhythm information of the object in the second additional captured image based on the degree of similarity between each of the parameter values. As an example, the calculation unit 20 may calculate the average value of the degree of similarity between each of the parameters as the degree of similarity between the rhythm information of the object in the first additional captured image and the rhythm information of the object in the second additional captured image. In other words, in the above-described example, the calculation unit 20 may calculate the average value of the degree of similarity between the prm2 values, the degree of similarity between the prm6 values, the degree of similarity between the prm7-1 values, the degree of similarity between the prm7-2 values, and the degree of similarity between the prm10 values as the degree of similarity between the rhythm information of the object in the first additional captured image and the rhythm information of the object in the second additional captured image. In a case where the calculation method is used, the degree of similarity between the rhythm information of the object in the first additional captured image and the rhythm information of the object in the second additional captured image is within a range of between zero and one and becomes closer to one as the similarity increases.

During the calculation of the above-described average value, the average value may be calculated after weighting the degree of similarity between the predetermined parameters. The average value is not limited to an arithmetic mean, but a geometric mean may be used. Instead of the average value, the median value of the degree of similarity between the parameters, the maximum value of the degree of similarity between the parameters, and the minimum value of the degree of similarity between the parameters may be the degree of similarity between the rhythm information of the object in the first additional captured image and the rhythm information of the object in the second additional captured image.

Hereinabove, a case where the rhythm information represents the pattern of temporal change of the object has been described. Next, a case where the rhythm information represents the pattern of spatial change of the object will be described. FIGS. 14A to 17D are explanatory diagrams showing the rhythm information representing the pattern of spatial change ofthe object, the generation of the rhythm information, and the calculation of the degree of similarity of the rhythm information.

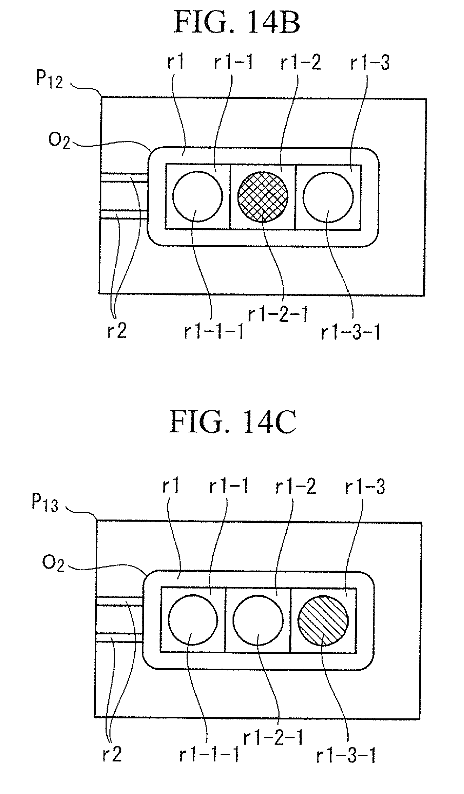

FIGS. 14A to 14C are schematic diagrams showing an object (O₂) that is a signaling mechanism extracted from the moving image (P₁₁, P₁₂, and P₁₃). FIG. 14A shows the object O₂ at a time when the signal is blue, FIG. 14B shows the object O₂ at a time when the signal is yellow, and FIG. 14C shows the object O₂ at a time when the signal is red. In FIGS. 14A to 14C, r1 is an imaging area for the signaling mechanism main body and r2 is an imaging area for a supporting portion supporting the signaling mechanism main body. r1-1 is an area in r1, and is an imaging area for a holding portion holding a blue lamp, r1-2 is an area in r1, and is an imaging area for a holding portion holding a yellow lamp, and r1-3 is an area in r1, and is an imaging area for a holding portion holding a red lamp. r1-1-1 is an area in r1-1, and is an imaging area for the blue lamp, r1-2-1 is an area in r1-2 and is an imaging area for the yellow lamp, and r1-3-1 is an area in r1-3, and is an imaging area for the red lamp.

For the convenience of description, the color of the blue lamp that is on is assumed to be blue-green and the color ofthe yellow lamp and the red lamp that are off is assumed to be black in a case where the signal is blue. In other words, in FIG. 14A, the color of the blue lamp area r1-1-1 is blue-green, the color of the yellow lamp area r1-2-1 is black, and the color of the red lamp area r1-3-1 is black. The color of the yellow lamp that is on is assumed to be yellow and the color of the blue lamp and the red lamp that are off is assumed to be black in a case where the signal is yellow. In other words, in FIG. 14B, the color of the blue lamp area r1-1-1 is black, the color of the yellow lamp area r1-2-1 is yellow, and the color of the red lamp area r1-3-1 is black. The color of the red lamp that is on is assumed to be red and the color of the blue lamp and the yellow lamp that are off is assumed to be black in a case where the signal is red. In other words, in FIG. 14C, the color of the blue lamp area r1-1-1 is black, the color of the yellow lamp area r1-2-1 is black, and the color of the red lamp area r1-3-1 is red.

Also, in a case where the signal is any one of blue, yellow, and red, the color of the entire area other than the lamp areas is assumed to be gray.

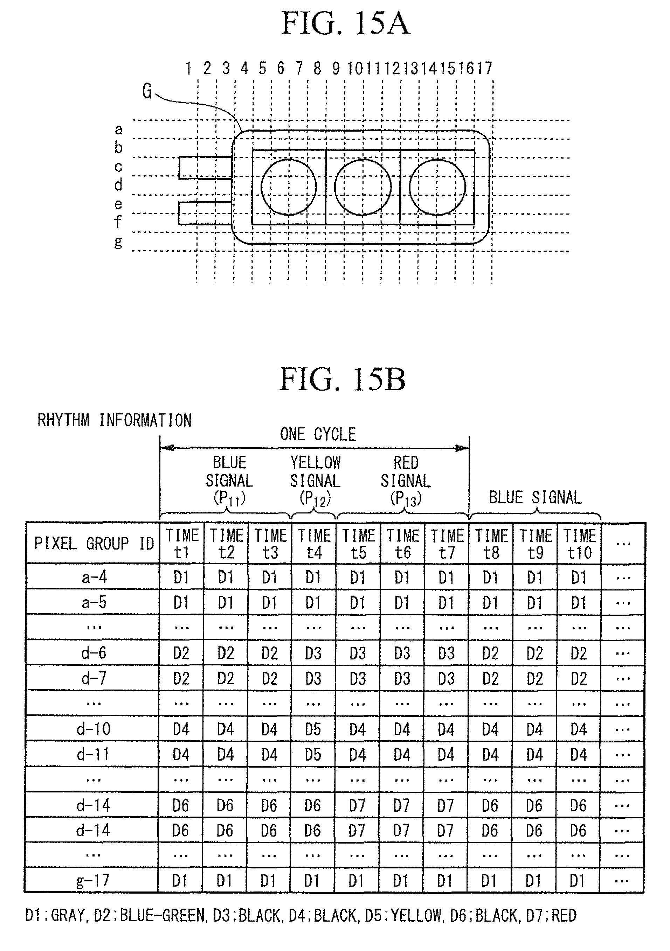

FIG. 15A is a schematic diagram showing pixel groups (unit areas) constituting the object O₂. The pixel group is constituted by a predetermined number of adjacent pixels.

FIG. 15B is the rhythm information representing the pattern of spatial change of the object O₂ in a case where the object O₂ is divided into the plurality of pixel groups as shown in FIG. 15A. The pixel group IDs (a-4, a-5, ...) shown in FIG. 15B are identification information for identifying the pixel groups constituting the object O₂ (in other words, the pixel groups shown in FIG. 15A). For example, the pixel group ID 'a-4' shown in FIG. 15B shows the pixel group of the G mark shown in FIG. 15A (pixel group defined by the index '4' in the lateral direction and the index 'a' in the longitudinal direction).

Each time shown in FIG. 15B (t1, t2, ...) is an imaging timing of the signaling mechanism shown in FIGS. I4A to 14C. t1 to t3 are imaging timing at a time when the signal is blue as shown in FIG. 14A.

t4 is imaging timing at a time when the signal is yellow as shown in FIG. 14B. t5 to t7 are imaging timing at a time when the signal is red as shown in FIG. 14C. In other words, t1 to t7 constitute one cycle of change in the color of the object O₂. The time shown in FIG. 15B is time for the convenience of description (in reality, the time of the blue (and red) signal is longer than the time of the yellow signal in many cases).

Each value (D1 to D7) shown in FIG. 15B is a value constituting the rhythm information, and the average pixel value of each pixel group constituting the object O₂ at each imaging timing (t1, t2, ...). D1 is the pixel value showing the gray color, D2 is the pixel value showing the blue-green color, D3 is the pixel value showing the black color, D4 is the pixel value showing the black color, D5 is the pixel value showing the yellow color, D6 is the pixel value showing the black color, and D7 is the pixel value representing the red color.

Namely, the rhythm information shown in FIG. 15B shows the pattern of change in the color of each pixel group constituting the object O₂, and, for example, shows the following Property 1 to Property 10.

Property 1: The color of the area (area r1-1-1 shown in FIGS. 14A to 14C) positioned to the left of the central area (r1-2-1 shown in FIGS. 14A to 14C) ofthe area (area r1 shown in FIGS. 14A to 14C) in the main portion of the object O₂ is cyclically changed to blue-green (D2) and black (D3)
Property 2: The color of the central area in the area of the main portion of the object O₂ is cyclically changed to black (D4) and yellow (D5)
Property 3: The color of the area (area r1-3-1 shown in FIGS. 14A to 14C) positioned to the right of the central area of the area in the main portion of the object O₂ is cyclically changed to black (D6) and red (D7)
Property 4: The color of the areas excluding the central area, the area positioned to the left of the central area, and the area positioned to the right of the central area (areas excluding the area r1-1-1, the area r1-2-1, and the area r1-3-1 from the area r1 shown in FIGS. 14A to 14C) of the area in the main portion of the object O₂ is gray (D1) all the time and is not changed
Property 5: The color of the area (area r2 shown in FIGS. 14A to 14C) other than the main portion of the object O₂ is gray (D1) all the time and is not changed
Property 6: After the color of the area (area r1-1-1) positioned to the left of the central area is changed from blue-green (D2) to black (D3), the color of the central area (area r1-2-1) is changed from black (D4) to yellow (D5)
Property 7: After the color of the central area (area r1-2-1) is changed from yellow (D5) to black (D4), the color of the area (area r1-3-1) positioned to the right of the central area is changed from black (D6) to red (D7)
Property 8: After the color of the area (area r1-3-1) positioned to the right of the central area is changed from red (D7) to black (D6), the color of the area (area r1-1-1) positioned to the left of the central area is changed from black (D3) to blue-green (D2)
Property 9: The area (area r1-1-1) positioned to the left of the central area which is changed to blue-green (D2), the central area (area r1-2-1) which is changed to yellow (D5), and the area (area r1-3-1) positioned to the right of the central area which is changed to red (D7) have approximately the same size
Property 10: The time in which the area (area r1-1-1) positioned to the left of the central area is blue-green (D2) is approximately the same as the time in which the area (area r1-3-1) positioned to the right of the central area is red (D7) and approximately three times the time in which the central area (area r1-2-1) is yellow (D5)

The rhythm information generation unit 116 of the additional electronic device 200 (as is the case with the rhythm information generation unit 16 of the electronic device 2) extracts the object from the moving image and generates the rhythm information representing the pattern of spatial change of the object. For example, in a case where the object O₂ is extracted, the rhythm information generation unit 116 generates the rhythm information constituted by the group of values whose element is each value showing the change in the color of each pixel group constituting the object O₂ as shown in FIG. 15B.

In a case where the rhythm information generation unit 116 generates the rhythm information of each object as described above, the calculation unit 20 of the electronic device 2 calculates the degree of similarity between the rhythm information of the object in the first additional captured image captured by the first additional electronic device 200 and the rhythm information of the object in the second additional captured image captured by the second additional electronic device 200 based on the degree of similarity related to at least one of the above-described properties.

For example, the degree of similarity between the rhythm information of the object in the first additional captured image and the rhythm information of the object in the second additional captured image may be calculated using the degree of similarity related to the above-described Property 2. In this case, for example, the calculation unit 20 may calculate the degree of similarity between the cyclical change in the color of the central area of the main portion of the object shown by the rhythm information of the object in the first additional captured image and the cyclical change in the color of the central area of the main portion of the object shown by the rhythm information of the object in the second additional captured image as the degree of similarity between the rhythm information of the object in the first additional captured image and the rhythm information of the object in the second additional captured image.

Various calculation methods are considered as the methods for calculating 'the degree of similarity in terms of the cyclical change in the color of the central area of the main portion.' As an example, the calculation unit 20 may calculate 'the degree of similarity in terms of the cyclical change in the color of the central area of the main portion' based on 'the degree of similarity in terms of the cyclical change in the color of the central area of the main portion' and 'the degree of similarity in terms of the color shown in the central area of the main portion.' The calculation unit 20 may compare 'the cycle of change in the color of the central area of the main portion' by the rhythm information of the object in the first additional captured image with 'the cycle of change in the color of the central area of the main portion' by the rhythm information of the object in the second additional captured image and the value obtained by dividing the shorter cycle by the longer cycle may be 'the degree of similarity in terms of the cycle of change in the color of the central area of the main portion.'

For example, in a case where 'the cycle of change in the color of the central area of the main portion' by the rhythm information of the object in the first additional captured image is four seconds and 'the cycle of change in the color of the central area of the main portion' by the rhythm information of the object in the second additional captured image is three seconds, the value of '0.75,' which is obtained by dividing the cycle of 'three (seconds)' by the cycle of 'four (seconds),' is the 'the degree of similarity in terms of the cycle of change in the color of the central area of the main portion.' In a case where the calculation method is used, 'the degree of similarity in terms of the cycle of change in the color of the central area of the main portion' is within a range of between zero and one and becomes closer to one as the similarity increases.

Also, the calculation unit 20 may compare 'the color shown in the central area of the main portion (color in which the number of gradations is reduced for comparison, the same applied hereinbelow)' by the rhythm information of the object in the first additional captured image with 'the color shown in the central area of the main portion' by the rhythm information of the object in the second additional captured image, and the value obtained by dividing the number of colors which is larger by the number of colors which is shown by any one may be the 'the degree of similarity in terms of the color shown in the central area of the main portion.'

For example, in a case where 'the color shown in the central area of the main portion' by the rhythm information of the object in the first additional captured image is three colors and 'the color shown in the central area of the main portion' by the rhythm information of the object in the second additional captured image is five colors, the value of '0.625,' which is obtained by dividing the number of colors of 'five (colors)' by the number of colors of 'eight (colors)' is 'the degree of similarity in terms of the color shown in the central area of the main portion.' In a case where the calculation method is used, 'the degree of similarity in terms of the color shown in the central area of the main portion' is within a range of between zero and one and becomes closer to one as the similarity increases.

Also, various calculation methods are considered as the methods for calculating 'the degree of similarity in terms of the cyclical change in the color of the central area of the main portion' based on 'the degree of similarity in terms of the cycle of change in the color of the central area of the main portion' and 'the degree of similarity in terms of the color shown in the central area of the main portion.' As an example, the calculation unit 20 may calculate the average value of 'the degree of similarity in terms of the cycle of change in the color of the central area of the main portion' and 'the degree of similarity in terms of the color shown in the central area of the main portion' as 'the degree of similarity in terms of the cyclical change in the color of the central area of the main portion.'

For example, in a case where 'the degree of similarity in terms of the cycle of change in the color of the central area of the main portion' is 0.75 and 'the degree of similarity in terms of the color shown in the central area of the main portion' is 0.625, the average value of '0.6875' is 'the degree of similarity in terms of the cyclical change in the color of the central area of the main portion.' In a case where the calculation method is used, 'the degree of similarity in terms of the cyclical change in the color of the central area of the main portion' is within a range of between zero and one and becomes closer to one as the similarity increases.

During the calculation of the above-described average value, the average value may be calculated after weighting 'the degree of similarity in terms of the cycle of change in the color of the central area of the main portion' and 'the degree of similarity in terms of the color shown in the central area of the main portion.' The average value is not limited to an arithmetic mean, but a geometric mean may be used. Instead of the average value, the median value, the maximum value, or the minimum value may be 'the degree of similarity in terms of the cyclical change in the color of the central area of the main portion.'

For example, the degree of similarity between the rhythm information of the object in the first additional captured image and the rhythm information of the object in the second additional captured image may be calculated using the degree of similarity related to the above-described Property 5. In this case, for example, the calculation unit 20 may calculate the degree of similarity between the unchanged color of the area other than the main portion of the object shown by the rhythm information of the object in the first additional captured image and the unchanged color of the area other than the main portion of the object shown by the rhythm information of the object in the second additional captured image as the degree of similarity between the rhythm information of the object in the first additional captured image and the rhythm information of the object in the second additional captured image.

Various calculation methods are considered as the methods for calculating 'the degree of similarity in terms of the unchanged color of the area other than the main portion.' As an example, the calculation unit 20 may hold the similar color information showing the degree of similarity in color between one color and another color (information whose value becomes closer to one as the similarity between the colors increases within a range of between zero and one) in advance, calculate the degree of similarity between the color of the area other than the main portion by the rhythm information of the object in the first additional captured image and the color of the area other than the main portion by the rhythm information of the object in the second additional captured image, and the calculated value may be the 'the degree of similarity in terms of the unchanged color of the area other than the main portion.' However, in a case where either the color of the area other than the main portion by the rhythm information of the object in the first additional captured image is cyclically changed or the color of the area other than the main portion by the rhythm information of the object in the second additional captured image is cyclically changed, 'the degree of similarity in terms of the unchanged color of the area other than the main portion' is zero.

Also, in a case where the degree of similarity between the rhythm information of the object in the first additional captured image and the rhythm information of the object in the second additional captured image is calculated using the degree of similarity related to at least two of the properties, the calculation unit 20 may calculate the degree of similarity between the rhythm information of the object in the first additional captured image and the rhythm information of the object in the second additional captured image based on the degree of similarity related to each of the properties. For example, in a case where the degree of similarity related to the above-described Property 2 and Property 5 is used, each of the degree of similarity related to the Property 2 and the degree of similarity related to the Property 5 may be calculated and the average value of the degree of similarity related to the Property 2 and the degree of similarity related to the Property 5 may be the degree of similarity between the rhythm information of the object in the first additional captured image and rhythm information of the object in the second additional captured image.

For example, in a case where 'the degree of similarity related to the Property 2 (for example, the degree of similarity in terms of the cyclical change in the color of the above-described central area)' is 0.875 and 'the degree of similarity related to the Property 5 (for example, the degree of similarity in terms of the unchanged color of the area other than the above-described main portion)' is 0.825, the average value of '0.85' may be the degree of similarity between the rhythm information of the object in the first additional captured image and the rhythm information of the object in the second additional captured image.

During the calculation of the above-described average value, the average value may be calculated after weighting 'the degree of similarity related to the Property 2' and 'the degree of similarity related to the Property 5.' The average value is not limited to an arithmetic mean, but a geometric mean may be used. Instead of the average value, the median value, the maximum value, or the minimum value may be 'the degree of similarity between the rhythm information of the object in the first additional captured image and the rhythm information of the object in the second additional captured image.'

Hereinabove, an example in which the degree of similarity between the rhythm information of the object in the first additional captured image and the rhythm information of the object in the second additional captured image is calculated based on the degree of similarity related to the Property 2 and the Property 5 has been described. However, each calculation method corresponding to each of the other properties may be applied to calculate the degree of similarity between the rhythm information of the object in the first additional captured image and the rhythm information of the object in the second additional captured image.

Also, hereinabove, an example in which the average pixel value for each pixel group is used as each of the values (D1 to D7) shown in FIG. 15B has been described. However, for example, the maximum pixel value (the maximum value among the pixel values of the plurality of pixels in the pixel group), the minimum pixel value (the minimum value among the pixel values of the plurality of pixels in the pixel group), and the median value (the median value among the pixel values of the plurality of pixels in the pixel group) may be used instead of the average pixel value.

Also, an example in which the predetermined number of adjacent pixels form the pixel group and each value (each value (D1 to D7) shown in FIG. 15B) constituting the rhythm information is calculated has been described. However, the adjacent pixels whose pixel value difference is equal to or less than a predetermined value may form the pixel group and each value constituting the rhythm information may be calculated.

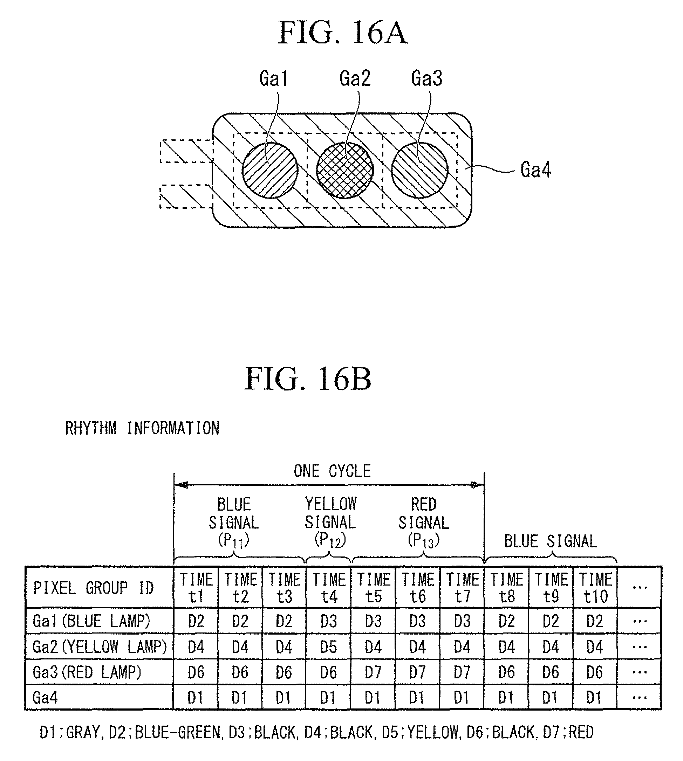

FIG. 16A is a schematic diagram showing the pixels constituting the object O₂ of the signaling mechanism shown in FIGS. 14A to 14C, in which the adjacent images whose pixel value difference is equal to or less than a predetermined number form the pixel group.

In FIG. 16A, Ga1 to Ga4 are the pixel groups of adjacent pixels whose pixel value difference is equal to or less than a predetermined number at each imaging timing (t1 to t7) (refer to FIG. 15B). Specifically, Ga1 shows the blue lamp area r1-1-1, Ga2 shows the yellow lamp area r1-2-1, Ga3 shows the red lamp area r1-3-1, and Ga4 shows the area other than the lamps (refer to FIGS. 14A to 14C).

FIG. 16B is the rhythm information representing the pattern of spatial change of the object O₂ in a case where the object O₂ is divided into a plurality of pixel groups as in FIG. 16A.

Each value shown in FIG. 16B (D1 to D7) is a value constituting the rhythm information, and is the average pixel value of each pixel group constituting the object O₂ at each imaging timing (t1, t2, ...). As described above, the maximum pixel value, the minimum pixel value, and the median value may be used instead of the average value.

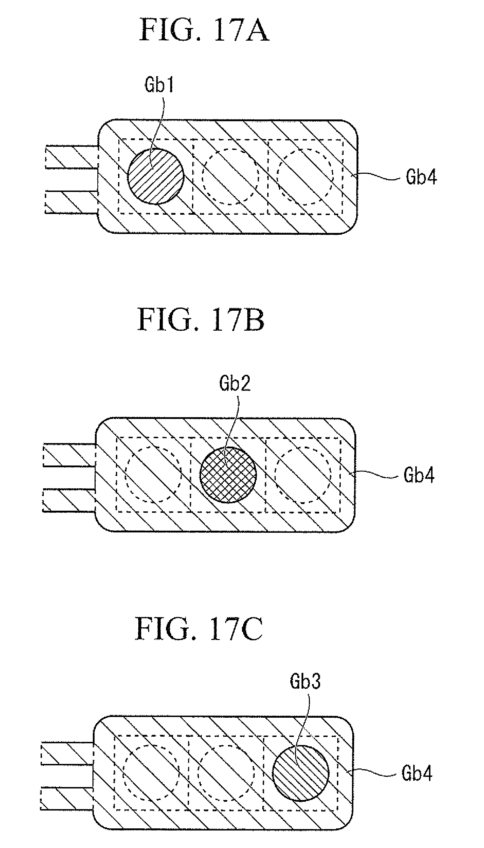

FIG. 17A is a schematic diagram showing the pixels constituting the object O₂ of the signaling mechanism shown in FIGS. 14A to 14C, in which the adjacent images whose pixel value difference is equal to or less than a predetermined number form the pixel group.

In FIG. 17A, Gb1 to Gb4 are the pixel groups of the adjacent images whose pixel value difference is equal to or less than a predetermined number at imaging timing (t1 to t3) when the signal is blue (refer to FIG. 15B). Specifically, Gb1 shows the blue area and Gb4 shows the black and gray areas (refer to FIGS. 14A to 14C). In other words, the difference between the pixel value (value showing the black color) of the areas of the yellow lamp and the red lamp that are off and the pixel value (value showing the gray color) of the areas other than the lamps is equal to or less than a predetermined value.

In FIG. 17B, Gb2 and Gb4 are the pixel groups of the adjacent images whose pixel value difference is equal to or less than a predetermined number at imaging timing (t4) when the signal is yellow (refer to FIG. 15B). Specifically, Gb2 shows the yellow area and Gb4 shows the black and gray areas (refer to FIGS. 14A to 14C). In other words, the difference between the pixel value (value showing the black color) of the areas of the blue lamp and the red lamp that are off and the pixel value (value showing the gray color) of the areas other than the lamps is equal to or less than a predetermined value.

In FIG. 17C, Gb3 and Gb4 are the pixel groups of the adjacent images whose pixel value difference is equal to or less than a predetermined number at imaging timing (t5 to t7) when the signal is red (refer to FIG. 15B). Specifically, Gb3 shows the red area and Gb4 shows the black and gray areas (refer to FIGS. 14A to 14C). In other words, the difference between the pixel value (value showing the black color) of the areas of the blue lamp and the yellow lamp that are off and the pixel value (value showing the gray color) of the areas other than the lamps is equal to or less than a predetermined value.

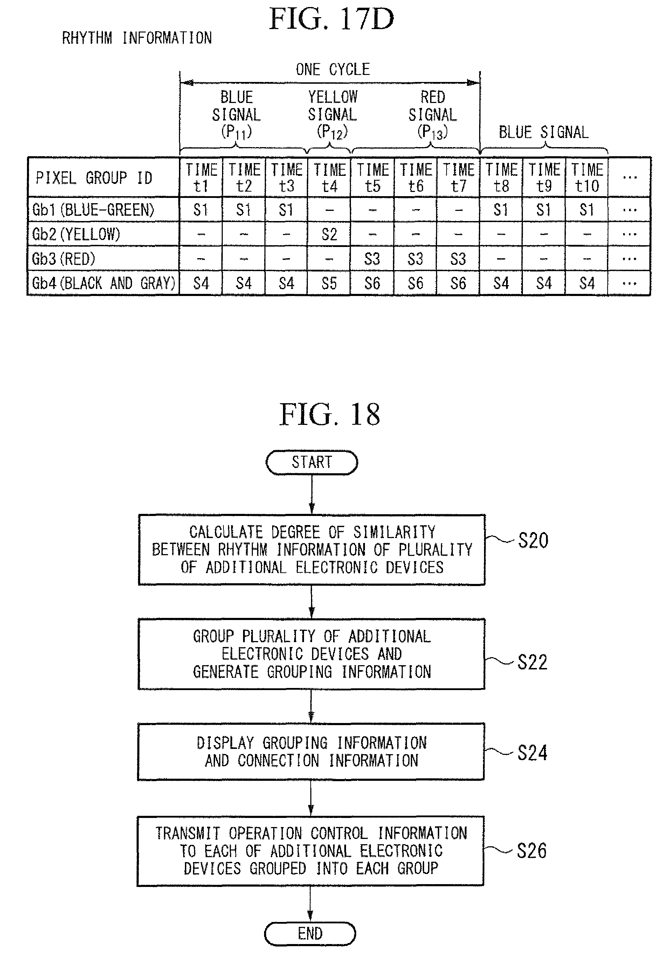

FIG. 17D is the rhythm information representing the pattern of spatial change of the object O₂ in a case where the object O₂ is divided into a plurality of pixel groups as in FIGS. 17A to 17C. Each value shown in FIG. 17D (S1 to S7) is a value constituting the rhythm information, and is the distribution of each pixel group (shape of the area) at each imaging timing. Specifically, S1 shows the distribution of the blue lamp area r1-1-1, S2 shows the distribution of the yellow lamp area r1-2-1, S3 shows the distribution of the red lamp area r1-3-1, S4 shows the distribution of the area other than the blue lamp, S5 shows the distribution of the area other than the yellow lamp, and S6 shows the distribution of the area other than the red lamp.

In other words, the rhythm information may be expressed by forming the adjacent pixels whose pixel value difference is equal to or less than a predetermined value in the pixel group as shown in FIG. 16B or FIG. 17D instead of expressing the rhythm information by forming a predetermined number of adjacent pixels in the pixel group as shown in FIG. 15B. In a case where the rhythm information is expressed by forming the adjacent pixels whose pixel value difference is equal to or less than a predetermined value in the pixel group as shown in FIG. 16B or FIG. 17D, the degree of similarity of the rhythm information is calculated in the same manner as in a case where the rhythm information is expressed by forming a predetermined number of adjacent pixels in the pixel group as shown in FIG. 15B.

Hereinabove, a case where the rhythm information is expressed as the pattern of temporal change of the object and the degree of similarity is calculated (FIGS. 11A to 13C) and a case where the rhythm information is expressed as the pattern of spatial change of the object and the degree of similarity is calculated (FIGS. 14A to 17D) have been respectively described using FIGS. 11A to 17D. However, the rhythm information may be expressed as the pattern of temporal change and the pattern of spatial change and the degree of similarity may be calculated. In other words, if the targets whose degree of similarity is calculated have the same type of rhythm information, it is possible to calculate the degree of similarity between the respective rhythm information, and thus the pattern of temporal change of the object may be the rhythm information, the pattern of spatial change of the object may be the rhythm information, and both of the patterns may be the rhythm information.

FIG. 18 is a flowchart showing an example of operation of the electronic device 2. When the flowchart shown in FIG. 18 starts, the rhythm information of the plurality of additional electronic devices 200 is stored in the rhythm information storage unit 290, and the connection information of the plurality of additional electronic devices 200 is stored in the connection information storage unit 292.

In FIG. 18, the calculation unit 20 calculates the degree of similarity between the rhythm information of the plurality of additional electronic devices 200 stored in the rhythm information storage unit 290 (step S20). The calculation unit 20 outputs the result of the calculation of the degree of similarity to the grouping unit 30.

The grouping unit 30 groups the plurality of additional electronic devices 200 and generates the grouping information based on the result of the calculation of the degree of similarity by the calculation unit 20 (step S22). The grouping unit 30 stores the grouping information in the grouping information storage unit 294. The grouping unit 30 informs the display unit 40 that the grouping information is stored in the grouping information storage unit 294.

The display unit 40 displays the grouping information and the connection information (step S24). Specifically, the display unit 40 displays the device ID of the additional electronic device 200 grouped into each group and the connection information for communicating with the additional electronic device 200 by referring to the connection information storage unit 292 and the grouping information storage unit 294.

The transmission unit 50 transmits the operation control information to each of the additional electronic devices 200 grouped into each group by referring to the connection information storage unit 292, grouping information storage unit 294, and the operation control information storage unit 296 so that each of the additional electronic devices 200 grouped into each group audio-outputs in the same manner, emits light in the same manner, or vibrates in the same manner (step S26). Then, the flowchart ends. The transmission unit 50 may transmit the operation control information when the operation reception unit (not shown) receives a predetermined user operation.

Next, the aspect shown in FIG. 7B (the aspect in which the grouping targets are the plurality of electronic devices (the electronic device 2 and the electronic devices 200), including the main electronic device 2) will be described.

As shown in FIG. 8D, the only difference between the configuration of the electronic device 2 according to the aspect shown in FIG. 7B and the configuration of the electronic device 2 according to the above-described aspect shown in FIG. 7A is that the imaging unit 18 is provided.

The description hereinafter will focus on the difference (the imaging unit 18).

The acquisition unit 10 of the electronic device 2 acquires the rhythm information representing the pattern of temporal or spatial change of the object in the captured image captured by the additional electronic device 200 and the rhythm information representing the pattern of temporal or spatial change of the object in the captured image captured by the main electronic device 2. Specifically, as shown in FIG. 9A, the reception unit 12 receives the device ID of the additional electronic device 200 and the connection information along with the rhythm information of the additional electronic device 200 from each of the additional electronic devices 200, the imaging unit 18 acquires the captured image captured by the main electronic device 2, and the rhythm information generation unit 16 extracts the object from the moving image captured by the imaging unit 18 and generates the rhythm information of the object extracted from the moving image. The rhythm information generation unit 16 generates the rhythm information in the same manner as the rhythm information generation unit 116 of the additional electronic device 200.

The acquisition unit 10 (the reception unit 12, the imaging unit 18, and the rhythm information generation unit 16) that acquires the rhythm information stores the acquired rhythm information in the rhythm information storage unit 290.

The calculation unit 20 calculates the degree of similarity of between rhythm information of the plurality of electronic devices (the main electronic device 2 and the additional electronic devices 200) acquired by the acquisition unit 10. Namely, the calculation unit 20 calculates the degree of similarity between the rhythm information of the object in the captured image generated by the rhythm information generation unit 16 and captured by the electronic device 2 and the rhythm information of the object in the captured image received by the reception unit 12 and captured by the additional electronic device 200. The calculation unit 20 may calculate the degree of similarity between the rhythm information of the additional electronic devices 200 received by the reception unit 12.

In a case where the degree of similarity between the rhythm information of the electronic device 2 and the rhythm information of the additional electronic device 200 calculated by the calculation unit 20 is equal to or higher than a predetermined threshold, the grouping unit 30 groups the electronic device 2 and the additional electronic device 200 into the same group. Also, the grouping unit 30 groups the additional electronic devices 200 into the same group even in a case where the degree of similarity between the rhythm information of the respective additional electronic device 200 is equal to or higher than a predetermined threshold.

In a case where the main electronic device 2 is grouped into any group by the grouping unit 30, processing is performed so that the main electronic device 2 grouped into the group and at least one of the additional electronic devices 200 audio-output in the same manner, emit light in the same manner, or vibrate in the same manner. For example, the transmission unit 50 may transmit the same value as the set value stored in the operation control information storage unit 296 (set value of the main electronic device 2) to the additional electronic device 200, and the setting unit (not shown) may store the value transmitted by the transmission unit 50 to the additional electronic device 200 (set value with respect to the additional electronic device 200) in the operation control information storage unit 296 as the set value of the main electronic device 2.

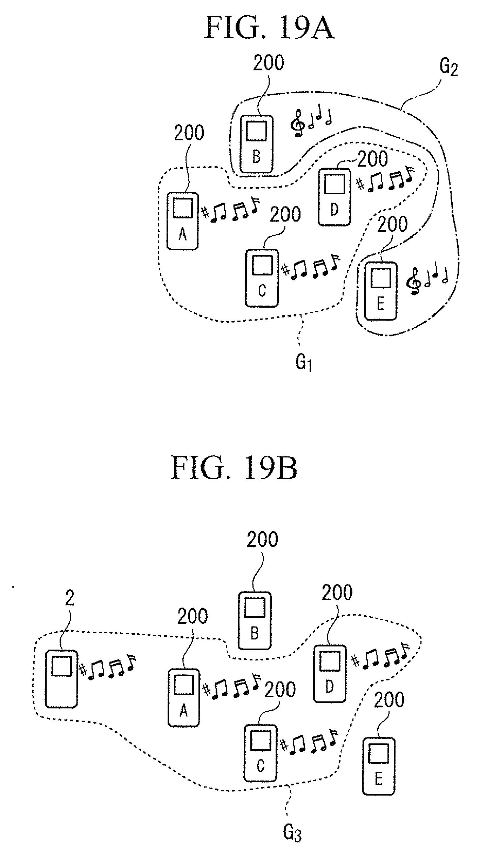

FIGS. 19A to 19C are schematic diagrams showing results of the grouping by the electronic device 2.

FIG. 19A is the result of the grouping according to the aspect shown in FIG. 7A. The electronic device 2 groups the three units of the electronic devices 200 (the electronic devices A, C, and D) among the five units of the additional electronic devices 200 (the electronic devices A to E) into the group G₁ and groups the two units of the electronic devices (the electronic devices B and E) into the group G₂ so that the electronic devices grouped into G₁ (the electronic devices A, C, and D) output audio in the same manner and the electronic devices grouped into G₂ (the electronic devices B and E) output audio in the same manner.

Namely, the plurality of additional electronic devices 200 can be grouped conveniently by the electronic device 2, and the plurality of additional electronic devices 200 in the same group can output audio in the same manner, emit light in the same manner, or vibrate in the same manner. Therefore, for example, in a place where an audience images the same subject using the electronic devices 200 of themselves (for example, a parade in an amusement park, an artist in a concert, and a performer in a circus), the behaviors of at least two of the additional electronic devices 200 imaging the same subject can be controlled in the same manner (it is possible to synchronize the behaviors).

FIG. 19B is the result of the grouping according to the aspect shown in FIG. 7B. The electronic device 2 groups the four units of the electronic devices (the main electronic device 2 and the electronic devices A, C, and D) among the main electronic device 2 and the five units of the electronic devices (the electronic devices A to E) into the group G₃ so that the electronic devices grouped into G₃ (the main electronic device 2 and the electronic devices A, C, and D) output audio in the same manner.

Namely, the plurality of additional electronic devices 200 in the same group as the main electronic device 1 can be grouped conveniently by the electronic device 2, and the plurality of electronic devices in the group can output audio in the same manner, emit light in the same manner, or vibrate in the same manner. Therefore, the behaviors of at least one of the additional electronic devices 200 imaging the same subject as the main electronic device 2 can be controlled in the same manner.

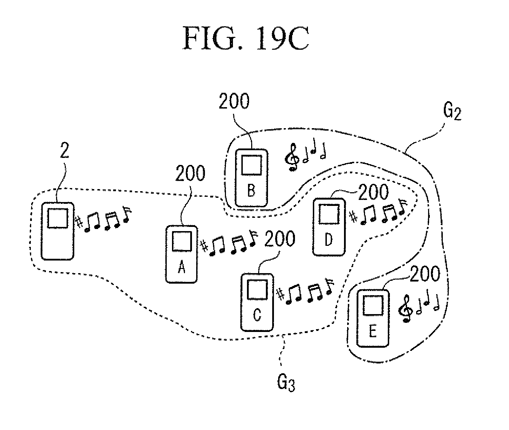

FIG. 19C is the result of the grouping according to the aspect shown in FIG. 7B. The electronic device 2 groups the four units of the electronic devices (the main electronic device 2 and the electronic devices A, C, and D) among the main electronic device 2 and the five units of the additional electronic devices (the electronic devices A to E) into the group G₃ and groups the two units of the electronic devices (the electronic devices B and E) into the group G₂ so that the electronic devices grouped into G₃ (the main electronic device 2 and the electronic devices A, C, and D) output audio in the same manner and the electronic devices grouped into G₂ (the electronic devices B and E) output audio in the same manner.

Namely, the plurality of additional electronic devices 200 in the same group as the main electronic device 1 and the plurality of additional electronic devices 200 not in the same group as the main electronic device 1 can be grouped conveniently by the electronic device 2, and the plurality of electronic devices in the same group can output audio in the same manner, emit light in the same manner, or vibrate in the same manner. Therefore, the behaviors of at least two of the additional electronic devices 200 imaging the same subject can be controlled in the same manner, and the behaviors of at least two of the electronic devices 200 imaging the same subject can be controlled in the same manner.

As described above, the plurality of electronic devices can be grouped conveniently by the electronic devices 1 and 2. Also, the plurality of electronic devices grouped into the same group can output audio in the same manner, emit light in the same manner, or vibrate in the same manner by the electronic devices 1 and 2.

Each processing by the electronic devices 1 and 2 may be performed by recording a program for the execution of each processing by the electronic devices 1 and 2 according to the embodiments of the present invention onto a computer-readable recording medium and reading and executing the program recorded onto the recording medium with a computer system. Herein, the 'computer system' may be a computer system including an OS, a peripheral and the like. Also, in a case where a WWW system is used, the 'computer system' includes an environment in which a homepage is provided (or display environment). Also, the 'computer-readable recording medium' refers to a writable non-volatile memory such as a flexible disk, a magneto-optical disk, a RO.M and a flash memory, a portable medium such as a CD-ROM, and a storage device such as a hard disk built into the computer system.

The 'computer-readable recording medium' also includes a medium holding the program for a predetermined time, such as a volatile memory within the computer system having the server and the client used in a case where the program is transmitted via a network such as the Internet and a communication line such as a telephone line (for example, dynamic random access memory (DRAM)). Also, the above-described program may be transmitted to another computer system via a transmission medium or by transmission waves in the transmission medium from the computer system which accommodates the program in the storage device or the like. Herein, the 'transmission medium' transmitting the program refers to a medium which has the function of transmitting information, examples of which include a network (communication network) such as the Internet and a communication line (communication wire) such as a telephone line. Also, the program may be a program for realizing some of the above-described functions. The above-described functions may be realized in combination with the program already stored in the computer system by a so-called difference file (difference program).

Hereinabove, the embodiments of the present invention have been described referring to the drawings. However, the specific configuration is not limited to the embodiments, but includes design or the like which does not depart from the scope ofthe present invention.

For example, the electronic device 1 may have the grip of the housing by a user as the rhythm information and group the electronic device 1 and the electronic device 100 based on the degree of similarity in terms of the grip.

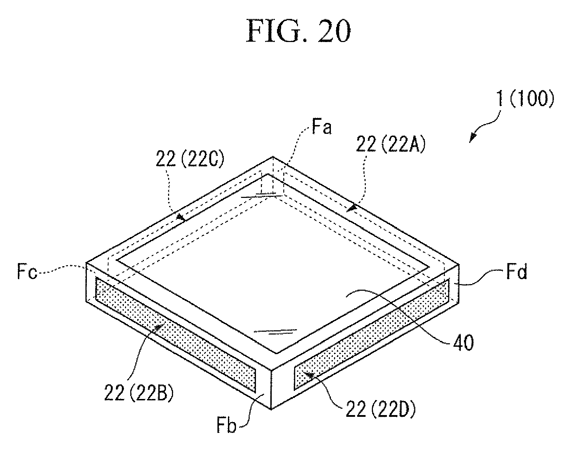

FIG. 20 is a perspective diagram showing an external configuration of the electronic device 1 and the electronic device 100 in this case. The housing of the electronic device 1 (or the electronic device 100) holds the display unit 40 and a sensing unit 22.

The display unit 40 is disposed on a plate surface of the housing. The surface of the housing where the display unit 40 is disposed is hereinafter referred to as a display surface.

The sensing unit 22 is disposed on four side surfaces Fa to Fd which correspond to four sides of the housing surrounding the display surface. The sensing unit 22A is disposed on the side surface Fa, the sensing unit 22B is disposed on the side surface Fb, the sensing unit 22C is disposed on the side surface Fc, and the sensing unit 22D is disposed on the side surface Fd. The sensing units 22A to 22D detect the presence or absence of contact (for example, with the user) from outside each side surface Fa to Fd and the contact positions (areas). With regard to what is common to all of the sensing units 22A to 22D, the A to D marks will be omitted to refer to the sensing unit as the 'sensing unit 22' or 'each sensing unit 22.'

When the user grips the electronic device 1 (or 100), each sensing unit 22 senses the position of the finger (contact position) of the user which is in contact with each side surface. The detection unit 14 (or 114) acquires the information of the contact position sensed by each sensing unit 22 as the rhythm information. Specifically, the detection unit 14 (or 114) detects the gravity direction by an acceleration sensor (not shown), determines the vertical direction so that the gravity direction is the downward direction, and determines the direction orthogonal to the vertical direction as the horizontal direction (horizontal direction when the display unit 40 is viewed from the front). The detection unit 14 (or 114) has the information of the contact position on each side surface in the vertical and horizontal directions as the rhythm information. The calculation unit 20 calculates the degree of similarity between the contact positions on the respective side surfaces in the vertical and horizontal directions as the degree of similarity between the rhythm information. For example, the calculation unit 20 calculates the distance between the contact position of the first electronic device 100 and the contact position of the second electronic device 100 on the respective side surfaces in the vertical and horizontal directions, and increases the degree of similarity as each calculated distance is short and decreases the degree of similarity as each calculated distance is long.

Alternatively, the detection unit 14 (or 114) may generate an index (grip pattern) of the contact position detected by each sensing unit 22 and may acquire the index as the rhythm information.

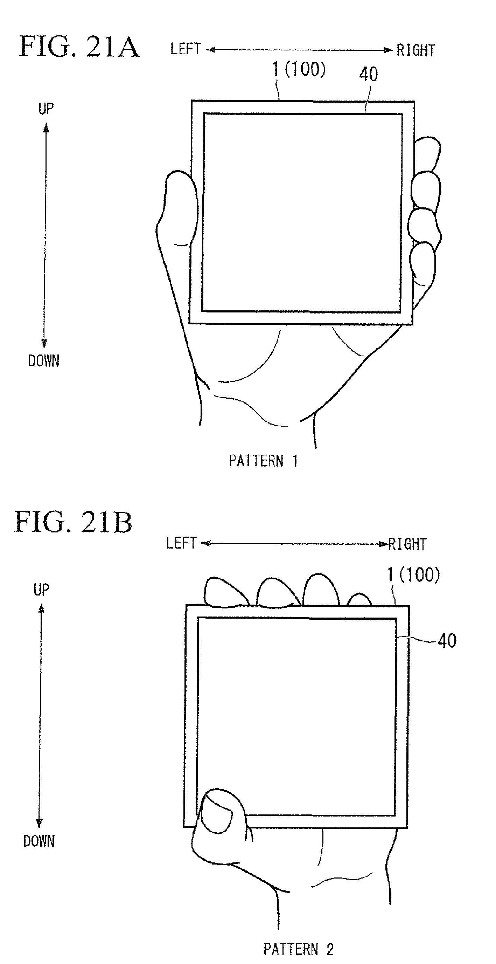

FIGS. 21A and 21B are images showing an example of each grip pattern that is the index of the contact position. The pattern 1 shown in FIG. 21A shows a grip on the left and right side surfaces. The pattern 2 shown in FIG. 21B shows a grip on the upper and lower side surfaces. The detection unit 14 (or 114) determines the grip pattern based on the contact position detected by each detection unit 22 and acquires the determined pattern as the rhythm information. For example, the detection unit 14 has the pattern 1 as the grip pattern in a case where the contact positions are on the left and right side surfaces, and has the pattern 2 as the grip pattern in a case where the contact positions are on the upper and lower side surfaces. The calculation unit 20 increases the degree of similarity of the electronic device I (or 100) having the same pattern and decreases the degree of similarity of the electronic device 1 (or 100) having different patterns. In other words, the grouping unit 30 groups the electronic device 1 (or 100) having the same pattern into the same group. In this manner, the amount of processing for the calculation of the degree of similarity by the calculation unit 20 is reduced as the detection unit 14 (or 114) acquires the grip pattern.

### Reference Signs List

- 1: ELECTRONIC DEVICE
- 10: ACQUISITION UNIT
- 12: RECEPTION UNIT
- 14: DETECTION UNIT
- 20: CALCULATION UNIT
- 22: SENSING UNIT
- 30: GROUPING UNIT
- 40: DISPLAY UNIT
- 50: TRANSMISSION UNIT
- 60: OPERATION CONTROL UNIT
- 90: RHYTHM INFORMATION STORAGE UNIT
- 92: CONNECTION INFORMATION STORAGE UNIT
- 94: GROUPING INFORMATION STORAGE UNIT
- 96: OPERATION CONTROL INFORMATION STORAGE UNIT
- 100: ELECTRONIC DEVICE (ADDITIONAL ELECTRONIC DEVICE)
- 114: DETECTION UNIT
- 140: DISPLAY UNIT
- 150: TRANSMISSION AND RECEPTION UNIT
- 160: OPERATION CONTROL UNIT
- 196: OPERATION CONTROL INFORMATION STORAGE UNIT
- 2: ELECTRONIC DEVICE
- 18: IMAGING UNIT
- 16: RHYTHM INFORMATION GENERATION UNIT
- 290: RHYTHM INFORMATION STORAGE UNIT
- 292: CONNECTION INFORMATION STORAGE UNIT
- 294: GROUPING INFORMATION STORAGE UNIT
- 296: OPERATION CONTROL INFORMATION STORAGE UNIT
- 200: ELECTRONIC DEVICE (ADDITIONAL ELECTRONIC DEVICE)
- 118: IMAGING UNIT
- 116: RHYTHM INFORMATION GENERATION UNIT

## Claims

1. An electronic device comprising:
an acquisition unit that acquires a plurality of pieces of rhythm information representing movements of respective housings of a plurality of electronic devices;
a calculation unit that calculates the degree of similarity between the plurality of pieces of rhythm information of the plurality of electronic devices acquired by the acquisition unit; and
a grouping unit that generates grouping information for grouping the plurality of electronic devices based on the degree of similarity between the plurality of pieces of rhythm information of the plurality of electronic devices calculated by the calculation unit.

2. The electronic device according to Claim 1,
wherein the acquisition unit includes a reception unit that receives the rhythm information of housings of additional electronic devices,
wherein the calculation unit calculates the degree of similarity between the rhythm information of a first additional electronic device received by the reception unit and the rhythm information of a second additional electronic device received by the reception unit, and
wherein the grouping unit groups the first additional electronic device and the second additional electronic device into the same group in a case where the degree of similarity between the rhythm information of the first additional electronic device and the rhythm information of the second additional electronic device calculated by the calculation unit is equal to or higher than a predetermined threshold.

3. The electronic device according to Claim 1,
wherein the acquisition unit includes:
a detection unit that detects the movement of the housing of a main electronic device; and
a reception unit that receives the rhythm information of the housings of additional electronic devices,
wherein the calculation unit calculates the degree of similarity between the rhythm information representing the movement of the housing of the main electronic device detected by the detection unit and the rhythm information of the additional electronic devices received by the reception unit, and
wherein the grouping unit groups the main electronic device and the additional electronic devices into the same group in a case where the degree of similarity between the rhythm information of the main electronic device and the rhythm information of the additional electronic devices calculated by the calculation unit is equal to or higher than a predetermined threshold.

4. An electronic device comprising:
an acquisition unit that acquires a plurality of pieces of rhythm information representing a grip on a housing by a user based on a result of sensing by a sensing unit which senses a contact position on each side surface of respective housings of a plurality of electronic devices;
a calculation unit that calculates the degree of similarity between the plurality of pieces of rhythm information of the plurality of electronic devices acquired by the acquisition unit; and
a grouping unit that generates grouping information for grouping the plurality of electronic devices based on the degree of similarity between the plurality of pieces of rhythm information of the plurality of electronic devices calculated by the calculation unit.

5. An electronic device comprising:
an acquisition unit that acquires a plurality of pieces of rhythm information representing the pattern of temporal or spatial change of objects in respective captured images of a plurality of electronic devices;
a calculation unit that calculates the degree of similarity between the plurality of pieces of rhythm information of the respective objects acquired by the acquisition unit; and
a grouping unit that generates grouping information for grouping the plurality of electronic devices based on the degree of similarity between the plurality of pieces of rhythm information of the respective objects calculated by the calculation unit.

6. The electronic device according to Claim 5,
wherein the acquisition unit includes a reception unit that receives the rhythm information of objects in captured images captured by additional electronic devices,
wherein the calculation unit calculates the degree of similarity between the rhythm information of an object in a first additional captured image captured by a first additional electronic device received by the reception unit and the rhythm information of an object in a second additional captured image captured by a second additional electronic device received by the reception unit, and
wherein the grouping unit groups the first additional electronic device and the second additional electronic device into the same group in a case where the degree of similarity between the rhythm information of the object in the first additional captured image and the rhythm information of the object in the second additional captured image calculated by the calculation unit is equal to or higher than a predetermined threshold.

7. The electronic device according to claim 5,
wherein the acquisition unit includes:
an imaging unit; and
a reception unit that receives the rhythm information of objects in captured images captured by additional electronic devices,
wherein the calculation unit calculates the degree of similarity between the rhythm information of the object in a main captured image captured by the imaging unit and the rhythm information of the object in the additional captured image captured by the additional electronic device received by the reception unit, and
wherein the grouping unit groups the main electronic device and the additional electronic device into the same group in a case where the degree of similarity between the rhythm information of the object in the main captured image and the rhythm information of the object in the additional captured image calculated by the calculation unit is equal to or higher than a predetermined threshold.

8. The electronic device according to any one of Claims 1 to 7, further comprising:
a display unit that displays connection information for communicating with the additional electronic device grouped into the same group by the grouping unit.

9. The electronic device according to any one of Claims 1 to 8, further comprising:
a transmission unit that transmits operation control information to the additional electronic device so that the plurality of electronic devices grouped into the same group by the grouping unit audio-output in the same manner, emit light in the same manner, or vibrate in the same manner.

10. A grouping method for grouping a plurality of electronic devices, comprising:
acquiring a plurality of pieces of rhythm information representing movements of respective housings of the plurality of electronic devices;
calculating the degree of similarity between the plurality of pieces of rhythm information of the plurality of electronic devices which are acquired; and
generating grouping information for grouping the plurality of electronic devices based on the degree of similarity between the plurality of pieces of rhythm information of the plurality of electronic devices which is calculated.

11. A grouping method for grouping a plurality of electronic devices, comprising:
acquiring a plurality of pieces of rhythm information representing the pattern of temporal or spatial change of objects in respective captured images of the plurality of electronic devices;
calculating the degree of similarity between the plurality of pieces of rhythm information of the respective objects which are acquired; and
generating grouping information for grouping the plurality of electronic devices based on the degree of similarity between the plurality of pieces of rhythm information of the respective objects which is calculated.
